# EUROPEAN PATENT APPLICATION

(11) **EP 2 105 833 A1**
(43) Date of publication of application: **30.09.2009**
(21) Application number: 07707013.4
(22) Date of filing: 18.01.2007
(51) Int. Cl.: G06F 9/445

(54) **APPLICATION SETTING TERMINAL, APPLICATION EXECUTING TERMINAL, AND SETTING INFORMATION MANAGEMENT MANAGING SERVER**

(71) Applicant: Mitsubishi Electric Corporation, Chiyoda-ku Tokyo 100-8310 (JP)
(72) Inventor: SAKAGUCHI, Hiroki, Tokyo 100-8310 (JP); IMAI, Shigeru, Tokyo 100-8310 (JP); MIURA, Shin, Tokyo 100-8310 (JP); MATSUBARA, Masami, Tokyo 100-8310 (JP); AKATSU, Shinji, Tokyo 100-8310 (JP); HANADA, Takehiko, Tokyo 100-8310 (JP)
(74) Representative: Gleiter, Hermann
(86) International application number: PCT/JP2007/050709
(87) International publication number: WO 2008/087729

(57) **Abstract**

An application setting terminal includes a GUI 11 for displaying a screen corresponding to a screen displayed by an application executing terminal 2 that executes an application, and accepting both a selection of an application to be installed and an on-screen arrangement of the application, which are input via the screen, and for accepting settings made for the application, and a setting information generating unit 13 for acquiring the meta information about the application the selection of which is accepted by the GUI 11 from the pieces of meta information about various applications to generate a setting information file including the meta information about the application, information about the on-screen arrangement, and information about the settings made for the application, which are accepted by the GUI 11, and transmits the setting information file to the application executing terminal 2.

## Description

### Field of the Invention

The present invention relates to an application setting terminal that makes settings for a desired application to be installed into an application executing terminal, an application executing terminal that executes an application for which settings have been made by the application setting terminal, and a setting information managing server that performs data management between the application setting terminal and the application executing terminal.

### Background of the Invention

A conventional application executing terminal can acquire a desired application, via a communication line, from a host terminal to automatically install the application therein by selecting the desired application using a remote installation system (refer to patent reference 1).

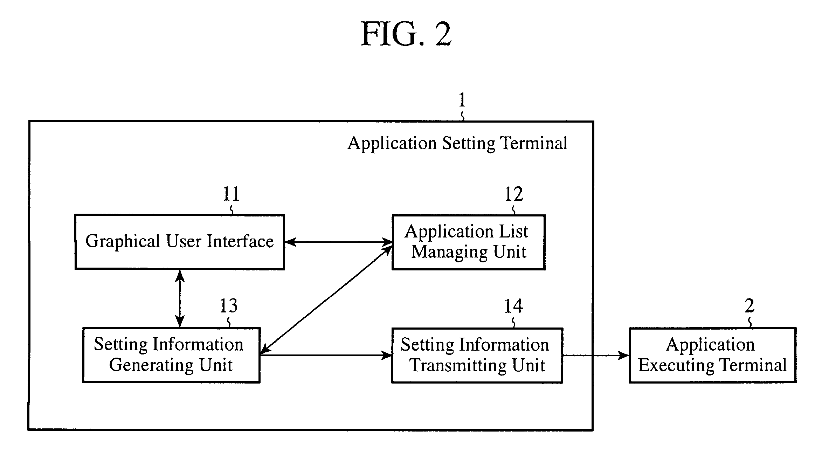

[Patent reference 1] JP,2005-310173,A (see paragraphs whose numbers range from [0028] to [0034] and Fig. 2)

Because the conventional application executing terminal is constructed as mentioned above, the conventional application executing terminal can select and install a desired application therein without causing the user to perform a complicated operation. A problem is however that the conventional application executing terminal cannot make any settings for an individual application and cannot determine the on-screen arrangement of an application.

The present invention is made in order to solve the above-mentioned problem, and it is therefore an object of the present invention to provide an application setting terminal, an application executing terminal, and a setting information managing server that can make settings for an individual application and can determine the on-screen arrangement of an application.

### Disclosure of the Invention

An application setting terminal in accordance with the present invention includes: an accepting means for displaying a screen corresponding to a screen displayed by an application executing terminal that executes an application, and accepting both a selection of an application to be installed and an on-screen arrangement of the application, which are input via the screen, and for accepting settings made for the application; a file generating means for acquiring attribution information about the application the selection of which is accepted by the accepting means form pieces of attribution information about various applications to generate a setting information file including the attribution information about the application, and information about the on-screen arrangement and information about the settings made for the application, which are accepted by the accepting means; and a file transmission means for transmitting the setting information file generated by the file generating means to the application executing terminal.

As a result, the present invention provides an advantage of being able to make settings for an application which is made to operate on the application executing terminal and determine the on-screen arrangement of the application.

An application executing terminal in accordance with the present invention includes: a judging means for referring to both equipment information about the application executing terminal itself and attribution information about an application, the attribution information being included in a setting information file transmitted from an application setting terminal, so as to judge whether or not the application executing terminal can use the application thereon; an installation means for installing the application with reference to the attribution information about the application when a result of the judgment by the judging means shows that the application executing terminal can use the application thereon; and an application setting means for placing the application installed by the installation means on a screen according to arrangement information about an on-screen arrangement, the arrangement information being included in the setting information file received by a file receiving means, and for making settings for the application according to setting information about settings made for the application, the setting information being included in the setting information file.

As a result, the present invention provides an advantage of being able to make settings for an application and determine the on-screen arrangement of the application according to a user's operation on the application setting terminal.

A setting information managing server in accordance with the present invention includes: an equipment information transmitting means for, when an application setting terminal generates a setting information file, transmitting equipment information about an application executing terminal managed by an equipment information managing means to the application setting terminal; and a file transferring means for receiving the setting information file from the application setting terminal to transfer the setting information file to the application executing terminal.

As a result, the present invention provides an advantage of being able to make settings for an application which is made to operate on the application executing terminal and determine the on-screen arrangement of the application.

### Brief Description of the Figures

[Fig. 1] Fig. 1 is a block diagram showing a connection relation between an application setting terminal and an application executing terminal in accordance with Embodiment 1 of the present invention;
[Fig. 2] Fig. 2 is a block diagram showing the application setting terminal in accordance with Embodiment 1 of the present invention;
[Fig. 3] Fig. 3 is a block diagram showing the application executing terminal in accordance with Embodiment 1 of the present invention;
[Fig. 4] Fig. 4 is a sequence diagram showing a process of making settings for an application and transmitting a setting information file having the settings to the application executing terminal 2, which is carried out by the application setting terminal 1;
[Fig. 5] Fig. 5 is a list diagram showing an application list managed by an application list managing unit 12;
[Fig. 6] Fig. 6 is an explanatory drawing showing an example of the screen of a GUI 11 which a user uses at the time of making settings for an application;
[Fig. 7] Fig. 7 is an explanatory drawing showing an example of the contents of the setting information file generated by a setting information generating unit 13;
[Fig. 8] Fig. 8 is an explanatory drawing showing an example of the contents of the setting information file written in the XML language;
[Fig. 9] Fig. 9 is a sequence diagram showing a process of receiving the setting information file, and making settings for the application and executing the application, which is carried out by the application executing terminal 2;
[Fig. 10] Fig. 10 is an explanatory drawing showing examples of the contents of equipment information;
[Fig. 11] Fig. 11 is a flow chart showing a process carried out by a setting information processing unit 23 of the application executing terminal 2;
[Fig. 12] Fig. 12 is an explanatory drawing showing a display screen of the application setting terminal 1 and a display screen of the application executing terminal 2;
[Fig. 13] Fig. 13 is a block diagram showing an application setting terminal in accordance with Embodiment 2 of the present invention;
[Fig. 14] Fig. 14 is a block diagram showing an application executing terminal in accordance with Embodiment 2 of the present invention;
[Fig. 15] Fig. 15 is a sequence diagram showing a process of making settings for an application and transmitting a setting information file having the settings to the application executing terminal 2, which is carried out by the application setting terminal 1;
[Fig. 16] Fig. 16 is a sequence diagram showing a process of receiving the setting information file, and making settings for the application and executing the application, which is carried out by the application executing terminal 2;
[Fig. 17] Fig. 17 is a block diagram showing the application setting terminal and the application executing terminal in accordance with Embodiment 2 of the present invention;
[Fig. 18] Fig. 18 is a sequence diagram showing a process of transmitting an operation event to the application executing terminal 2, which is carried out by the application setting terminal, and a process of making settings for the application and executing the application, which is carried out by the application executing terminal;
[Fig. 19] Fig. 19 is a block diagram showing an application setting terminal in accordance with Embodiment 4 of the present invention;
[Fig. 20] Fig. 20 is a block diagram showing an application executing terminal in accordance with Embodiment 4 of the present invention;
[Fig. 21] Fig. 21(a) is an explanatory drawing showing user information managed by a user information managing unit 51 of the application setting terminal 1, and Fig. 21(b) is an explanatory drawing showing transmission source information and setting authority information which are managed by a setting source information managing unit 29 of the application executing terminal 2;
[Fig. 22] Fig. 22 is a sequence diagram showing a process of making settings for an application and transmitting a setting information file having the settings to the application executing terminal 2, which is carried out by the application setting terminal 1;
[Fig. 23] Fig. 23 is a sequence diagram showing a process of receiving the setting information file, and making settings for the application and executing the application, which is carried out by the application executing terminal 2;
[Fig. 24] Fig. 24 is a block diagram showing an application setting terminal in accordance with Embodiment 5 of the present invention;
[Fig. 25] Fig. 25 is a block diagram showing an application executing terminal in accordance with Embodiment 5 of the present invention;
[Fig. 26] Fig. 26 is a sequence diagram showing a process of making settings for an application and transmitting a setting information file having the settings to the application executing terminal 2, which is carried out by the application setting terminal 1;
[Fig. 27] Fig. 27 is a sequence diagram showing a process of receiving the setting information file after transmitting equipment information, and making settings for the application and executing the application, which is carried out by the application executing terminal 2;
[Fig. 28] Fig. 28 is a block diagram showing an application setting terminal in accordance with Embodiment 6 of the present invention;
[Fig. 29] Fig. 29 is a block diagram showing an application executing terminal in accordance with Embodiment 6 of the present invention;
[Fig. 30] Fig. 30 is a sequence diagram showing a process of making settings for an application and transmitting a setting information file having the settings to the application executing terminal 2, which is carried out by the application setting terminal 1;
[Fig. 31] Fig. 31 is a sequence diagram showing a process of receiving the setting information file after transmitting equipment information, and making settings for the application and executing the application, which is carried out by the application executing terminal 2;
[Fig. 32] Fig. 32 is a block diagram showing a connection relation among an application setting terminal, a setting information managing server, and an application executing terminal in accordance with Embodiment 7 of the present invention;
[Fig. 33] Fig. 33 is a block diagram showing the setting information managing server in accordance with Embodiment 7 of the present invention;
[Fig. 34] Fig. 34 is a sequence diagram showing processes carried out by the application setting terminal, the setting information managing server, and the application executing terminal;
[Fig. 35] Fig. 35 is a block diagram showing a setting information managing server in accordance with Embodiment 8 of the present invention;
[Fig. 36] Fig. 36 is a sequence diagram showing processes carried out by an application setting terminal, the setting information managing server, and an application executing terminal;
[Fig. 37] Fig. 37 is a block diagram showing an application setting terminal in accordance with Embodiment 9 of the present invention;
[Fig. 38] Fig. 38 is a block diagram showing an application executing terminal in accordance with Embodiment 9 of the present invention;
[Fig. 39] Fig. 39 is a sequence diagram showing a process of making settings for an application and transmitting a setting information file having the settings to the application executing terminal 2, which is carried out by the application setting terminal 1; and
[Fig. 40] Fig. 40 is a sequence diagram showing a process of receiving the setting information file, and making settings for the application and executing the application, which is carried out by the application executing terminal 2.

### Preferred Embodiments of the Invention

Hereafter, in order to explain this invention in greater detail, the preferred embodiments of the present invention will be described with reference to the accompanying drawings. Embodiment 1.

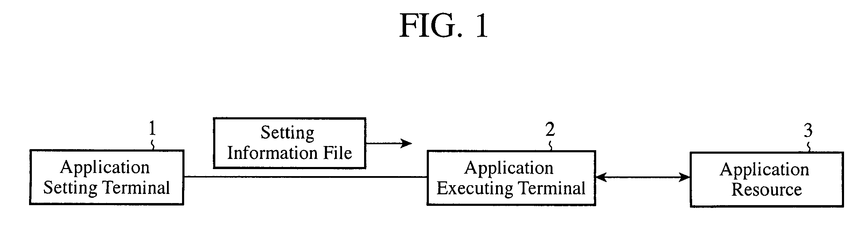

Fig. 1 is a block diagram showing a connection relation between an application setting terminal and an application executing terminal in accordance with Embodiment 1 of the present invention.
In the figure, the application setting terminal 1 performs an operation of making settings for an application (software that operates on a specific platform), which is made to operate on the application setting terminal 2, and other operations.
The application executing terminal 2 executes an application for which settings have been made by the application setting terminal 1.
An application resource 3 is a memory area for storing various files, and, when the application executing terminal 2 installs an application therein, if there is a lack of any file required for the installation, provides the application executing terminal with a file required for the installation.

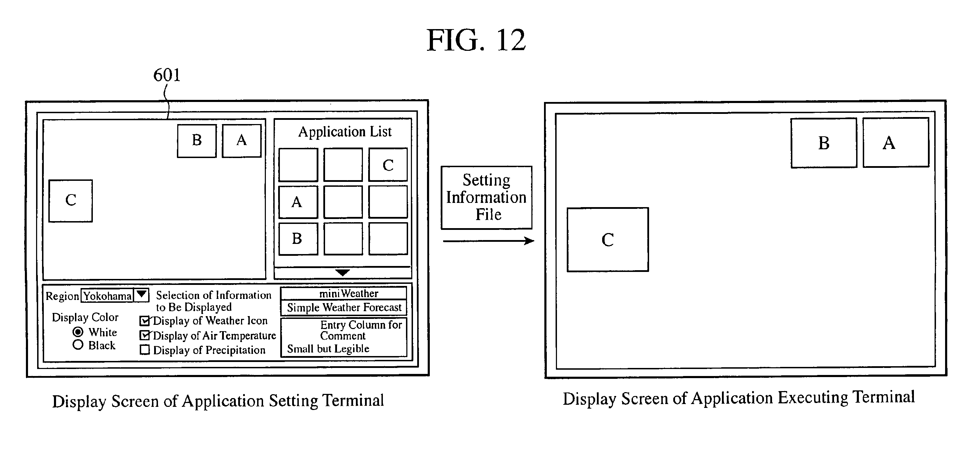

Fig. 2 is a block diagram showing the application setting terminal in accordance with Embodiment 1 of the present invention. In the figure, a graphical user interface (referred to as a "GUI" from here on) 11 is comprised of, for example, a man-machine I/F, such as a keyboard mouse, a display unit, such as a liquid crystal display, and so on, and carries out a process of, when a user makes settings for an application, displaying a setting screen for the application and accepting the user's operation. More specifically, the GUI 11 carries out a process of displaying a screen corresponding to a screen displayed by the application executing terminal 2 (refer to Fig. 12), and accepting a selection of an application to be installed and the on-screen arrangement of the application, which are input on the screen, and also accepting settings made for the application. The GUI 11 constructs an accepting means.

An application list managing unit 12 is comprised of, for example, a hard disk drive and so on, and lists and manages plural pieces of meta information each of which is attribution information about an application which can be registered (e.g., an application name, an application ID, URI (UNIFORM RESOURCE IDENTIFIER) of a thumbnail image, requirements for installation, requirements for operation, an application explanation, URI of application data, setting items, and setting information). The application list managing unit 12 constructs an attribution information managing means.

A setting information generating unit 13 is comprised of, for example, a semiconductor integrated circuit substrate, on which a MPU and so on are mounted, and so on, and carries out a process of acquiring the meta information about an application, a selection of which has been accepted by the GUI 11 from the plural pieces of meta information managed by the application list managing unit 12, and generating a setting information file including the meta information about the application, information about the on-screen arrangement accepted by the GUI 11, and information about the settings made for the application. The setting information generating unit 13 constructs a file generating means.
The setting information transmitting unit 14 is comprised of, for example, a communication MODEM and so on, and carries out a process of transmitting the setting information file generated by the setting information generating unit 13 to the application executing terminal 2. The setting information transmitting unit 14 constructs a file transmission means.

In the example of Fig. 2, it is assumed that the GUI 11, the application list managing unit 12, the setting information generating unit 13, and the setting information transmitting unit 14 which are components of the application setting terminal 1 consists of pieces of hardware for exclusive use. As an alternative, in a case in which the application setting terminal 1 consists of a computer, a program in which the descriptions of processes carried out respectively by the GUI 11, the application list managing unit 12, the setting information generating unit 13, and the setting information transmitting unit 14 are described can be stored in a memory of the computer, and the CPU of the computer can execute the program stored in the memory.

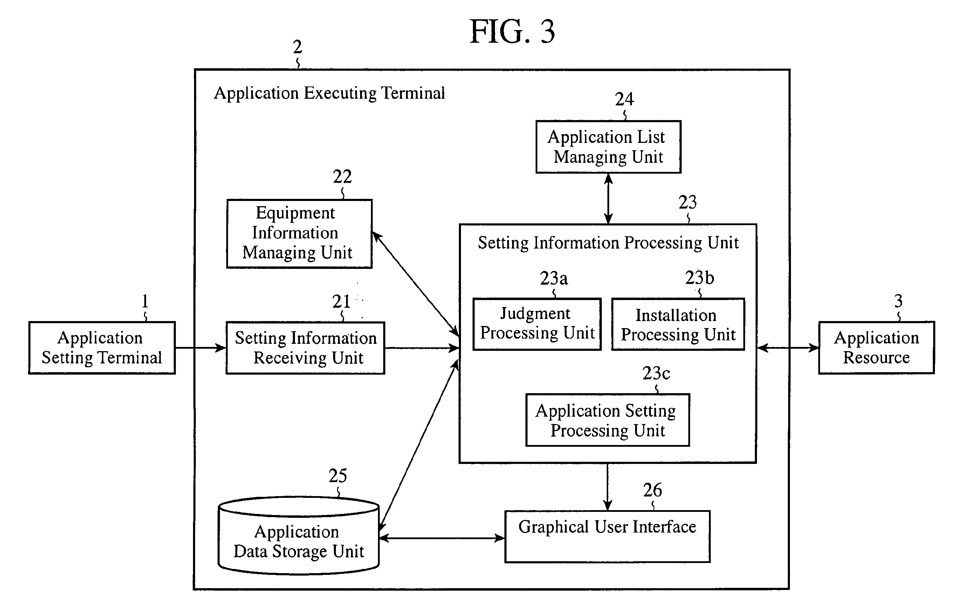

Fig. 3 is a block diagram showing the application executing terminal in accordance with Embodiment 1 of the present invention. In the figure, a setting information receiving unit 21 is comprised of, for example, a communication MODEM and so on, and carries out a process of receiving a setting information file transmitted from the application setting terminal 1. The setting information receiving unit 21 constructs a file receiving means.
An equipment information managing unit 22 is comprised of, for example, a hard disk drive and so on, and manages equipment information (e.g., an equipment name, an equipment ID, a MAC Address, an S/W platform version, and device information) about the application executing terminal itself. The equipment information managing unit 22 constructs an equipment information managing means.

A setting information processing unit 23 is comprised of, for example, a semiconductor integrated circuit substrate in which an MPU and so on are mounted, and so on.
A judgment processing unit 23a of the setting information processing unit 23 carries out a process of referring to the equipment information managed by the equipment information managing unit 22 and the meta information about the application included in the setting information file received by the setting information receiving unit 21 to judge whether the application executing terminal itself can use the application thereon. The judgment processing unit 23a constructs a judging means.

An installation processing unit 23b of the setting information processing unit 23 carries out a process of installing the application with reference to the meta information about the application when the judgment result of the judgment processing unit 23a shows that the application executing terminal itself can use the application thereon. The installation processing unit 23b constructs an installation means.
An application setting processing unit 23c of the setting information processing unit 23 carries out a process of placing the application installed by the installation processing unit 23b on the screen of the application executing terminal according to the information about the on-screen arrangement included in the setting information file received by the setting information receiving unit 21, and making settings for the application according to the information about the settings made for the application, the information being included in the setting information file. The application setting processing unit 23c constructs an application setting means.

An application list managing unit 24 is comprised of, for example, a hard disk drive and so on, and lists and manages pieces of meta information (e.g., an application name, an application ID, requirements for installation, requirements for operation, an application explanation, URI of application data, a display position, a comment, setting items, and setting information) each of which is attribution information about an application registered into the application executing terminal itself.
An application data storage unit 25 is comprised of, for example, a hard disk drive and so on, and stores data about a main part of the application which is installed into the application executing terminal by the installation processing unit 23b of the setting information processing unit 23.

A graphical user interface (referred to as a "GUI" from here on) 26 is comprised of, for example, a man-machine I/F, such as a keyboard mouse, and a display unit, such as a liquid crystal display, and so on, and carries out a process of executing the application for which the settings have been made by the application setting processing unit 23c of the setting information processing unit 23, displaying data on the screen, and so on. The GUI 26 constructs an application executing means.

In the example of Fig. 3, it is assumed that the setting information receiving unit 21, the equipment information managing unit 22, the setting information processing unit 23, the application list managing unit 24, the application data storage unit 25, and the GUI 26 which are components of the application executing terminal 2 consist of pieces of hardware for exclusive use. As an alternative, in a case in which the application executing terminal 2 consists of a computer, a program in which the descriptions of processes respectively carried out by the setting information receiving unit 21, the equipment information managing unit 22, the setting information processing unit 23, the application list managing unit 24, the application data storage unit 25, and the GUI 26 are described can be stored in a memory of the computer, and the CPU of the computer can be made to execute the program stored in the memory.

Next, the operation of the application setting terminal and that of the application executing terminal will be explained.

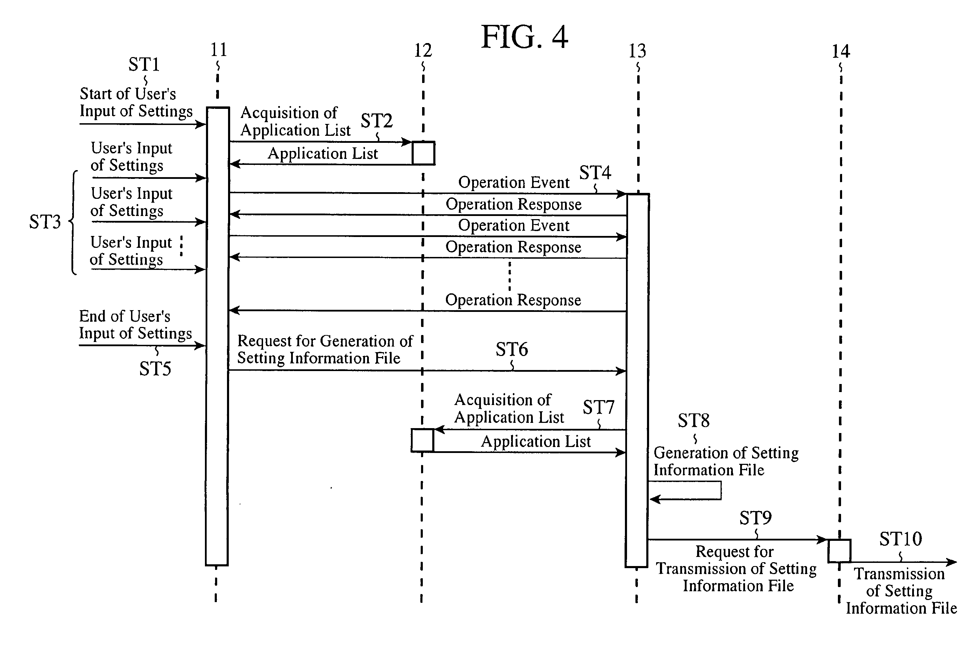

Fig. 4 is a sequence diagram showing a process of making settings for an application and transmitting a setting information file indicating the settings to the application executing terminal 2, which is carried out by the application setting terminal 1.
When a user operates the GUI 11 of the application setting terminal 1 and instructs the application setting terminal to start an input of settings for an application (step ST1), the GUI 11 acquires the pieces of meta information of applications which are listed (referred to as an "application list" from here on) from the application list managing unit 12 (step ST2).

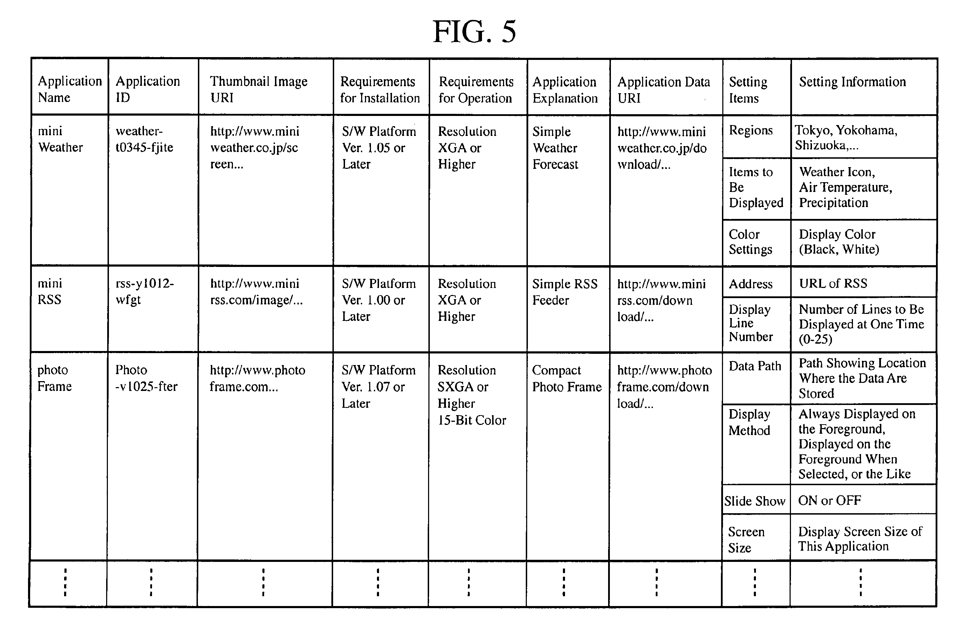

Fig. 5 is an explanatory drawing showing the application list managed by the application list managing unit 12.
In Fig. 5, an "application name" is the name of an application displayed on the screen at the time of making settings for the application, and an "application ID" is a specific ID specifying an application to be installed.
A "thumbnail image URI" indicates the position at which a thumbnail image of an application displayed on the screen at the time of making settings for the application is stored.

"Requirements for installation" indicate requirements required for installation of an application, and "requirements for operation" indicate requirements required for an application to operate.
An "application explanation" indicates a brief explanation of an application, and an "application data URI" indicates the position at which data about a main part of an application are stored.
"Setting items" indicate items which can be set up for an application, and "setting information" indicates optional items which can be set up by the user.

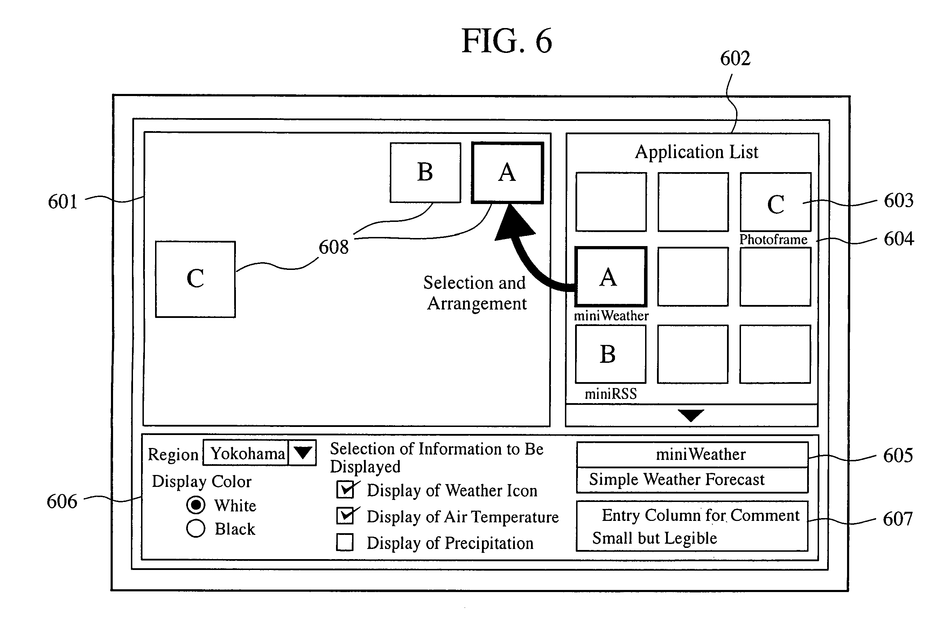

Fig. 6 is an explanatory drawing showing an example of the screen of the GUI 11 which the user uses at the time of making settings for an application.
In Fig. 6, reference numeral 601 denotes a window which is used by the user when determining the arrangement of applications, and the window is a virtual screen corresponding to a screen display generated by the GUI 26 of the application executing terminal 2.
Reference numeral 602 denotes the list of applications managed by the application list managing unit 12, reference numeral 603 denotes a thumbnail image of each application managed by the application list managing unit 12, and reference numeral 604 denotes the application name of each application managed by the application list managing unit 12.

Reference numeral 605 denotes an application explanation column in which an "application name" and an "application explanation" shown in Fig. 5 are displayed, and reference numeral 606 denotes an application setting column in which the user is allowed to make settings for an application which the user has selected.
Reference numeral 607 denotes a comment entry column which is displayed in addition to an "application explanation" of Fig. 5 when the application executing terminal 2 installs an application, and reference numeral 608 denotes applications for each of which settings have been made by the user.

When, in step ST2, acquiring the application list from the application list managing unit 12, the GUI 11 produces a screen display as shown in Fig. 6 with reference to the application list.
As a result, when the user finds a desired application with reference to the thumbnail images 603 and the application names 604 currently displayed in the application list 602 of Fig. 6, the user operates the GUI 11 to select his or her desired application.
Fig. 6 shows an example in which an application whose thumbnail image 603 is "A" and whose application name 604 is "miniWeather" has been selected. In this case, in the application explanation column 605, the GUI 11 displays, as its application name, "miniWeather" and also displays, as its application explanation, "simple weather forecast".

After the user has selected a desired application, he or she operates the GUI 11 to determine the arrangement of the desired application on the virtual screen 601.
In Fig. 6, an example in which the user places the application 608 whose thumbnail image 603 is "A" in an upper right corner portion of the screen is shown.
Furthermore, in Fig. 6, the user also determines the arrangement on the virtual screen 601 of the applications 608 whose thumbnail images 603 are "B" and "C".

Next, the user operates the GUI 11 so as to make settings for each of the applications by using the application setting column 606.
In the example of Fig. 6, the setting information about the application 608 whose thumbnail image 603 is "A" is shown, and the region is set to "Yokohama", the information to be displayed is set to "weather icon" and "air temperature", and the display color is set to "white".

When the user operates the GUI 11 so as to make a selection of an application, determine the arrangement of the application, and make settings for the application (step ST3), the GUI 11 outputs an operation event indicating the user's operation information (the application ID of the application selected by the user, the on-screen arrangement of the application, and the setting information about the application) to the setting information generating unit 13 (step ST4).
When receiving the operation event from the GUI 11, the setting information generating unit 13 temporarily stores the operation information indicated by the operation event and then sends an operation response to the operation event back to the GUI 11.

When the user operates the GUI 11 so as to instruct the application setting terminal to end the input of the settings for the application (step ST5), the GUI 11 outputs a request for generation of a setting information file to the setting information generating unit 13 (step ST6).
When receiving the request for generation of a setting information file from the GUI 11, the setting information generating unit 13 acquires the application list from the application list managing unit 12 (step ST7).

When acquiring the application list from the application list managing unit 12, the setting information generating unit 13 acquires the application ID of the application selected by the user from the user's operation information temporarily stored therein, and extracts the meta information about the application, which corresponds to the application ID, from the application list.
For example, when the application selected by the user is the one whose thumbnail image 603 is "A", the setting information generating unit extracts the meta information about the application whose application name is "miniWeather" (refer to the Fig. 5).
The setting information generating unit 13 then generates a setting information file including both the meta information about the application selected by the user, and the operation information (the on-screen arrangement of the application and the setting information about the application) stored temporarily therein (step ST8).

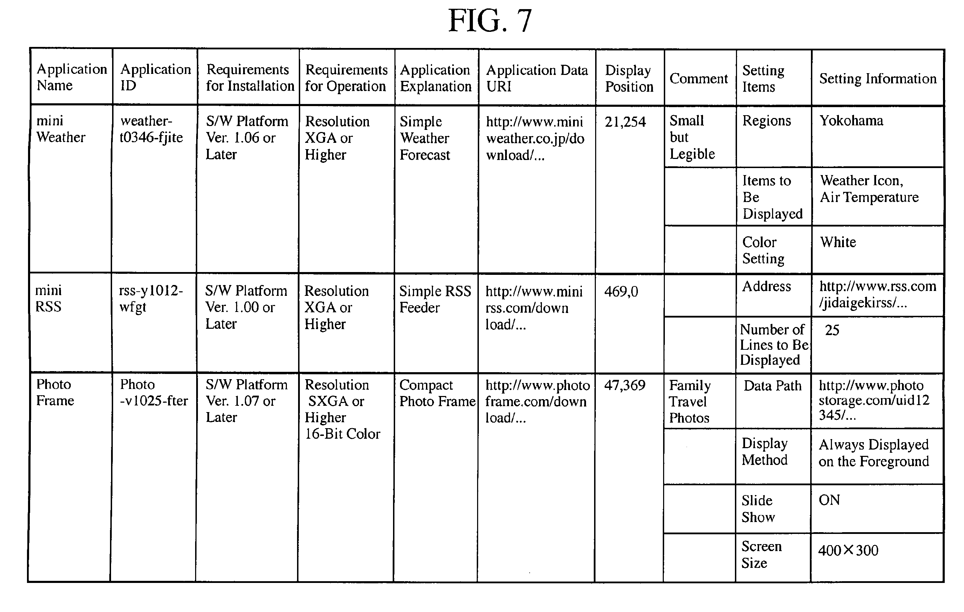

Fig. 7 is an explanatory drawing showing an example of the contents of the setting information file generated by the setting information generating unit 13
In Fig. 7, a "display position" indicates the on-screen arrangement of an application, and is expressed as relative coordinates with respect to the upper left corner of the screen.
Furthermore, a "comment" indicates a description which is written in the setting information file by the user at the time of making settings for an application, "setting items" indicate items set up by the user, and "setting information" indicates information actually set up by the user.

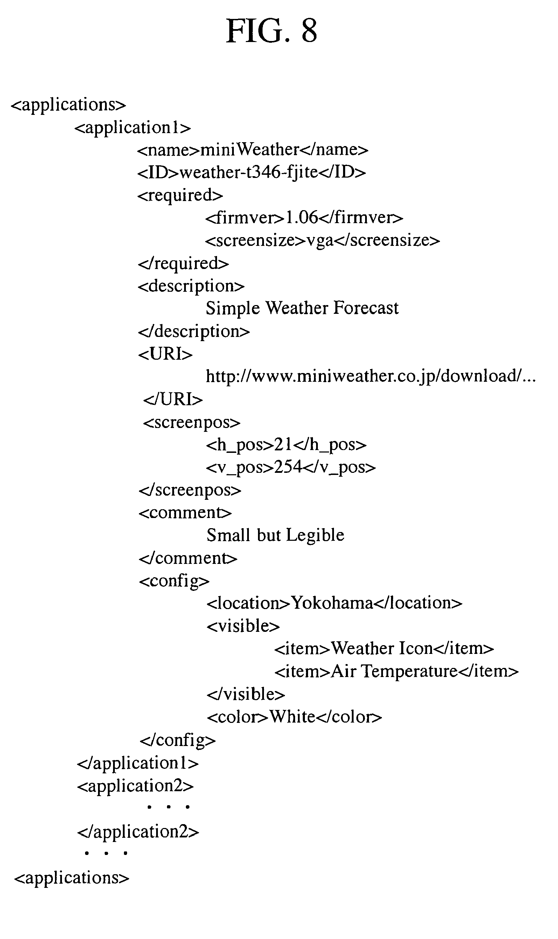

Fig. 8 is an explanatory drawing showing an example of the contents of the setting information file written in the XML language.
In Fig. 8, the name of each tag corresponds to a column name of the table of the setting description file of Fig. 7, the "<applications1>" tag of the "<application>" tag is the description of the application "miniWeather" registered as the first application shown in Fig. 7.
The "<name>" tag indicates the "application name" of the application shown in Fig. 7, and the "<ID>" tag indicates the "application ID" of the application shown in Fig. 7.

The "<required>" tag indicates the operating condition of the application, the "<firmver>" tag indicates the "requirements for installation" of the application shown in Fig. 7, and the "<screensize>" tag indicates the "requirements for operation" of the application shown in Fig. 7.
Furthermore, the "<description>" tag indicates the "application explanation" of the application shown in Fig. 7, the "<URI>" tag indicates the "application data URI" of the application shown in Fig. 7, the "<screenpos>" tag indicates the "display position" of the application shown in Fig. 7, the "<comment>" tag indicates the "comment" of the application shown in Fig. 7, and the "<config>" tag indicates the "setting items" and "setting information" of the application shown in Fig. 7.
The "<application2>" tag is the description about the application "miniRSS" registered as the second application shown in Fig. 7.

When generating the setting information file, the setting information generating unit 13 outputs the setting information file to the setting information transmitting unit 14 and also issues a request for transmission of the setting information file to the setting information transmitting unit 14 (step ST9).
When receiving the request for transmission of the setting information file from the setting information generating unit 13, the setting information transmitting unit 14 transmits the setting information file to the application executing terminal 2 (step ST10).
At that time, in a case in which the application setting terminal 1 and the application executing terminal 2 are connected directly to each other via, for example, a network, the setting information transmitting unit 14 transmits the setting information file to the application executing terminal 2 by way of the network. In contrast, in a case in which the application setting terminal 1 and the application executing terminal 2 are not connected directly to each other via, for example, a network, the setting information transmitting unit 14 records the setting information file into an external storage, such as a flash memory, and provides the application executing terminal 2 with the setting information file via the external storage.

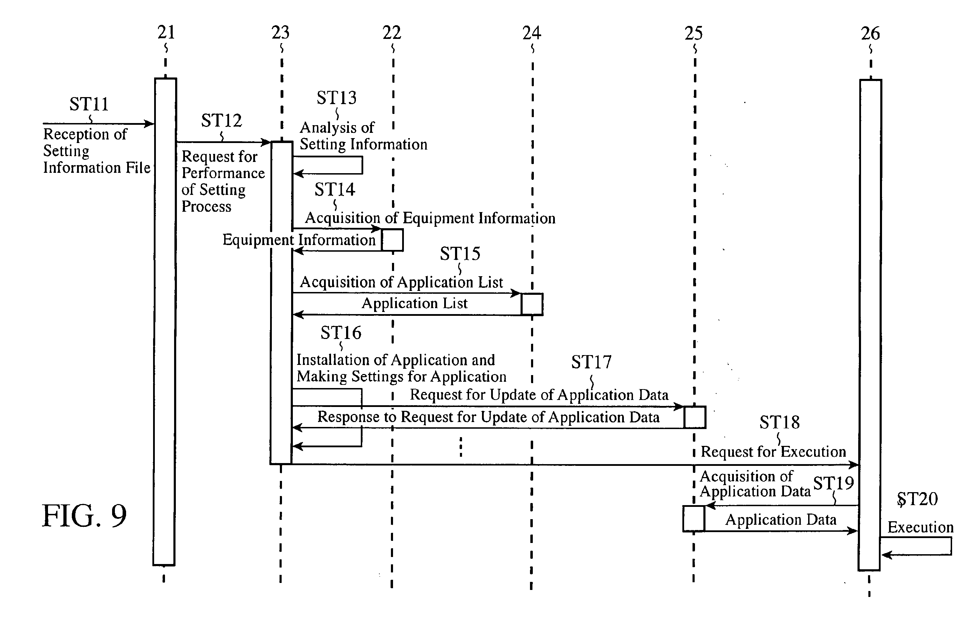

Fig. 9 is a sequence diagram showing a process of receiving the setting information file, and making settings for an application and executing the application, which is carried out by the application executing terminal 2.
When receiving the setting information file transmitted from the application setting terminal 1 (step ST11) , the setting information receiving unit 21 of the application executing terminal 2 outputs the setting information file to the setting information processing unit 23, and also issues a request for performance of an application setting process to the setting information processing unit 23 (step ST12).
At that time, in the case in which the transmitting means of transmitting the setting information file transmits the setting information file to the application executing terminal via a network, the setting information receiving unit 21 serves as a client that carries out network communications, whereas in the case in which the transmitting means transmits the setting information file to the application executing terminal via an external storage, the setting information receiving unit 21 serves as a loader that reads the setting information file.

When receiving the request for performance of an application setting process from the setting information receiving unit 21, the setting information processing unit 23 carries out a process of analyzing the setting information file outputted from the setting information receiving unit 21 so as to install an application, perform an application setting process, etc.
Hereafter, the processing carried out by the setting information processing unit 23 will be explained concretely.

The setting information processing unit 23 analyzes the setting information file outputted from the setting information receiving unit 21 (step ST13) so as to extract the "application ID", the "requirements for installation", the "requirements for operation", the "application data URI", the "display position", the "comment", the "setting items", and the "setting information" from the setting information file.
The setting information processing unit 23 counts the number of applications described in the setting information file. In the example of Fig. 7, the number of applications is "3".
Furthermore, the setting information processing unit 23 acquires the equipment information about the application executing terminal itself from the equipment information managing unit 22 (step ST14), and acquires the application list from the application list managing unit 24 (step ST15).

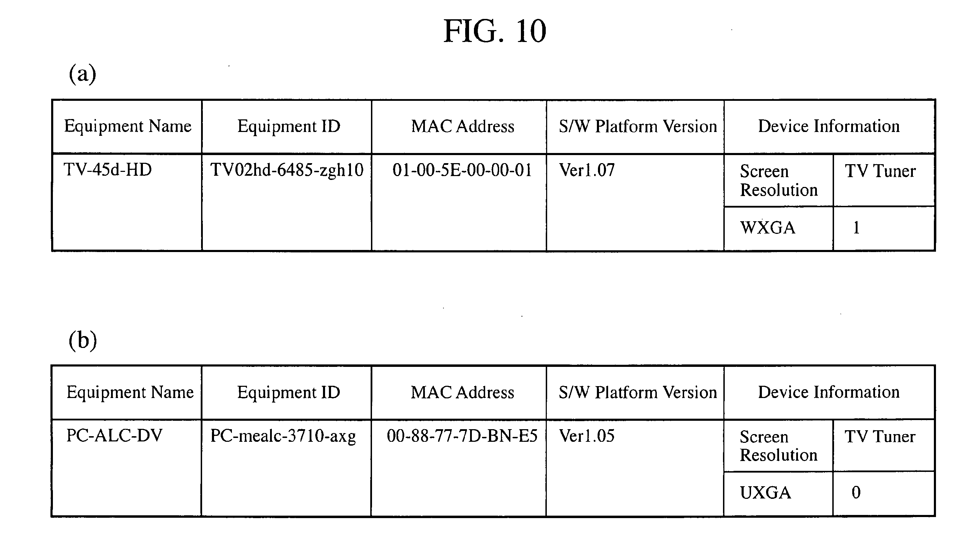

Fig. 10 is an explanatory drawing showing examples of the contents of the equipment information.
In Fig. 10, examples in each of which an "equipment name", an "equipment ID", a "MAC Address", an "S/W platform version", and "device information" are described as the equipment information are shown.
Although two example of the equipment information are illustrated in Fig. 10, the equipment information managing unit 22 of each application executing terminal 2 holds only one pieces of equipment information about the application executing terminal itself.
The "equipment name" indicates the equipment name of each application executing terminal itself, the "equipment ID" indicates an ID specific to the equipment, the "MAC Address" shows a MAC address assigned to the application executing terminal itself, the "S/W platform version" is the version information of the S/W platform, and the "device information" is information about a device mounted in the equipment.

When acquiring both the equipment information about the application executing terminal itself and the application list, the setting information processing unit 23 starts installing the applications and a process of making settings for each of the applications (step ST16).

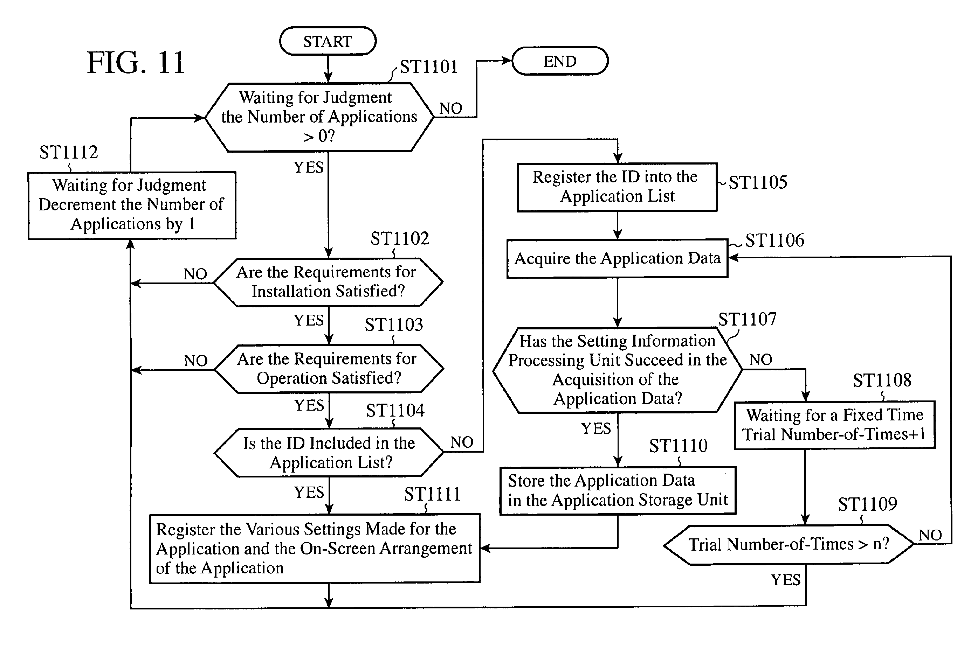

Fig. 11 is a flow chart showing the processing carried out by the setting information processing unit 23 of the application executing terminal 2.
The judgment processing unit 23a of the setting information processing unit 23 refers to the number of applications which the setting information processing unit has counted previously so as to check to see whether or not there is an application to be installed (step ST1101).
In the example of Fig. 7, because the number of applications described in the setting information file is "3", the setting information processing unit carries out processes of step ST1102 and subsequent steps three times.

The judgment processing unit 23a of the setting information processing unit 23 refers to the equipment information of the application executing terminal itself and the meta information about each of the applications included in the setting information file so as to judge whether the application executing terminal can use each of the applications thereon.
More specifically, the judgment processing unit 23a judges whether each of the applications satisfies its requirements for installation (step ST1102), and also judges whether the application executing terminal itself satisfies the requirements for operation (step ST1103). When judging that each of the applications satisfies its requirements for installation and the application executing terminal itself satisfies the requirements for operation, the judgment processing unit certifies that the application executing terminal can use each of the applications thereon.

For example, in a case in which one application to be installed is the one whose application name is "miniWeather", the S/W platform version of the application executing terminal itself has to be "1.06 or later" because the version of the S/W platform is described to be "1.06 or later" as the "requirements for installation" (refer to Fig. 7).
In a case in which the "equipment name" of the application executing terminal 2 is "TV-45d-HD", the application satisfies the requirements for installation because the "S/W platform version" is "1.07" as shown in Fig. 10.
In contrast, in a case in which the "equipment name" of the application executing terminal 2 is "PC-ALC-DV", the application does not satisfy the requirements for installation because the "S/W platform version" is "1.05" as shown in Fig. 10.
Therefore, in the case in which the application executing terminal 2 is the equipment "TV-45d-HD", the application satisfies the requirements for installation, whereas when the application executing terminal 2 is the equipment "PC-ALC-DV", the application does not satisfy the requirements for installation and the installation of the application is not carried out.

Furthermore, in a case in which one application to be installed is the one whose application name is "miniWeather", the application executing terminal itself has to have a resolution of XGA or higher because "resolution of XGA or higher" is described as "the requirements for operation" (refer to Fig. 7).
Because the resolution of the equipment "TV-45d-HD" which allows the application to satisfy the requirements for installation is "WXGA" as shown in Fig. 10, the application executing terminal satisfies the operating condition.
Therefore, when the application executing terminal 2 is the equipment "TV-45d-HD", it is certified that the application executing terminal can use the application thereon.

When the judgment result of the judgment processing unit 23a indicates that the application executing terminal can use an application to be installed thereon, the installation processing unit 23b of the setting information processing unit 23 examines whether or not the "application ID" of the application to be installed has been registered with reference to the application list previously acquired from the application list managing unit 24 (step ST1104).
When the "application ID" of the application to be installed has not been registered yet, the installation processing unit 23b starts a process of installing the application to be installed because the application has not been installed yet.

More specifically, the installation processing unit 23b registers the "application ID" of the application to be installed into the application list (step ST1105), and then acquires application data about the application from the application resource 3 specified by the "application data URI" of the application to be installed automatically (step ST1106).
The application resource 3 is not limited to the one installed on a network, and can be alternatively an external storage which is not installed on the network.

Next, the installation processing unit 23b judges whether the installation processing unit has succeeded in acquiring the application data from the application resource 3 normally (step ST1107).
After having succeeded in acquiring the application data normally, the installation processing unit 23b outputs a request for update of the application data to the application data storage unit 25, and stores the application data in the application data storage unit 25 (step ST17 of Fig. 9 and ST1110 of Fig. 11).

In contrast, when having failed in acquiring the application data normally, the installation processing unit 23b increments the number of times (acquisition trial number-of-times) that the installation processing unit has tried to acquire the application data by one and then waits a certain period of time (step ST1108).
When the number of times that the installation processing unit has tried to acquire the application data does not exceed a predetermined number of times n (the acquisition trial number-of-times <= n), the installation processing unit 23b tries to acquire the application from the application resource 3 again (step ST1109).
In contrast, when the number of times that the installation processing unit has tried to acquire the application data exceeds the predetermined number of times n (the acquisition trial number-of-times > n), the installation processing unit 23b gives up the installation of this application.

When the installation processing unit 23b stores the application data in the application data storage unit 25, or when the installation processing unit, in step ST1104, judges that the "application ID" of the application to be installed has been registered in the application executing terminal, the application setting processing unit 23c of the setting information processing unit 23 makes settings for the application according to the "comment", the "setting items", and the "setting information" which the setting information processing unit has extracted from the setting information file previously, and also determines the on-screen arrangement of the application according to the "display position" which the setting information processing unit has extracted from the setting information file previously (step ST1111).

When the above-mentioned processes are completed, the judgment processing unit 23a of the setting information processing unit 23 decrements the number of applications queuing for judgment by one in order to perform installation of the next application and make settings for the next application, and then transitions to making settings for the next application (step ST1112).
When judging, in step ST1101, that the number of applications queuing for judgment has become "0", the setting information processing unit ends the application installation processing and the application setting processing.

When the setting information processing unit 23 ends the application setting processing and the GUI 26 receives a request for execution of an application from the setting information processing unit 23 (step ST18 of Fig. 9), the GUI 26 acquires the application data about the application from the application data storage unit 25 (step ST19).
When acquiring the application data from the application data storage unit 25, the GUI 26 executes the application and then displays it on the screen (step ST20).

For example, the application setting terminal 1 generates a setting information file as shown in Fig. 8 on the setting screen of Fig. 6 by using the application list of Fig. 5, and, in the case in which the application executing terminal 2 is the equipment "TV-45d-HD", a screen display which is the same as the virtual screen display 601 generated by the application setting terminal 1 is reproduced on the display screen of the application executing terminal 2, as shown in Fig. 12.

According to this Embodiment 1, the application setting terminal 1 is constructed in such a way as to accept a selection of an application, an on-screen arrangement of the application, and settings made for the application in advance, generate a setting information file automatically, and transmit the setting information file to the application executing terminal 2. Therefore, the application setting terminal 1 can make settings for an application which is made to operate by the application executing terminal 2, and can determine the on-screen arrangement of the application.
As a result, in a case in which a user of the application executing terminal 2 is not good at performing a setting operation of making settings for an application, another user is enabled to generate a setting information file and transmit the setting information file to the application executing terminal 2 by using his or her terminal as the application setting terminal 1 so that, instead of the user poor at making the setting operation, the other user can make settings for the application.
Furthermore, because by preparing and storing a plurality of setting information files, the plurality of setting information files can be used properly according to the use of the application executing terminal and who uses the application executing terminal, a more flexible operating environment can be constructed.

### Embodiment 2.

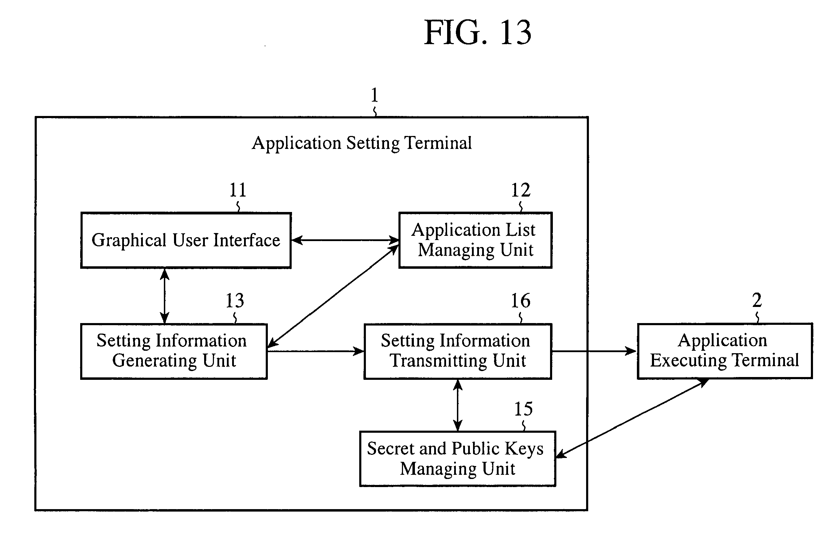

Fig. 13 is a block diagram showing an application setting terminal in accordance with Embodiment 2 of the present invention. In the figure, because the same reference numerals as those shown in Fig. 2 denote the same components or like components, the explanation of these components will be omitted hereafter.
A secret and public keys managing unit 15 manages a secret key and a public key of the application setting terminal itself, and transmits the public key of the application setting terminal itself to an application executing terminal 2 and also receives a public key of the application executing terminal 2. The secret and public keys managing unit 15 constructs a key managing means and a public key exchanging means.
Although the secret and public keys managing unit 15 which is constructed in such a way as to exchange the public key with the application executing terminal 2 is shown, the secret and public keys managing unit 15 can be alternatively constructed in such a way as to exchange the public key with the application executing terminal 2 via a setting information transmitting unit 16.

The setting information transmitting unit 16 is comprised of, for example, a communication MODEM and so on, and carries out a process of, when transmitting a setting information file generated by a setting information generating unit 13 to the application executing terminal 2, adding a signature to the setting information file by using the secret key of the application setting terminal itself managed by the secret and public keys managing unit 15, and encrypting the setting information file by using the public key of the application executing terminal 2. The setting information transmitting unit 16 constructs a file transmission means.

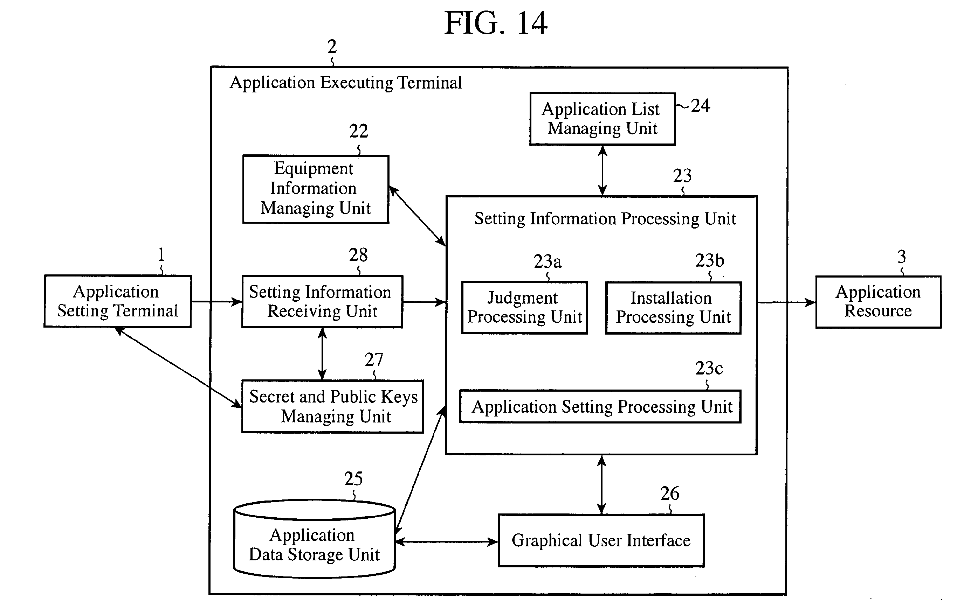

Fig. 14 is a block diagram showing the application executing terminal in accordance with Embodiment 2 of the present invention. In the figure, because the same reference numerals as those shown in Fig. 3 denote the same components or like components, the explanation of these components will be omitted hereafter.
A secret and public keys managing unit 27 manages a secret key and a public key of the application executing terminal itself, and transmits the public key of the application executing terminal itself to the application setting terminal 1 and also receives the public key of the application setting terminal 1. The secret and public keys managing unit 27 constructs the key managing means and the public key exchanging means.
Although the secret and public keys managing unit 27 which is constructed in such a way as to exchange the public key with the application setting terminal 1 is shown, the secret and public keys managing unit 27 can be alternatively constructed in such a way as to exchange the public key with the application setting terminal 1 via a setting information transmitting unit 28.

The setting information receiving unit 28 is comprised of, for example, a communication MODEM and so on, and carries out a process of, when receiving a setting information file transmitted from the application setting terminal 1, decrypting the setting information file by using the secret key of the application setting terminal itself managed by the secret and public keys managing unit 27, and also verifying the signature added to the setting information file by using the public key of the application setting terminal 1. The setting information receiving unit 28 constructs a file receiving means.

Next, the operation of the application setting terminal and that of the application executing terminal will be explained.

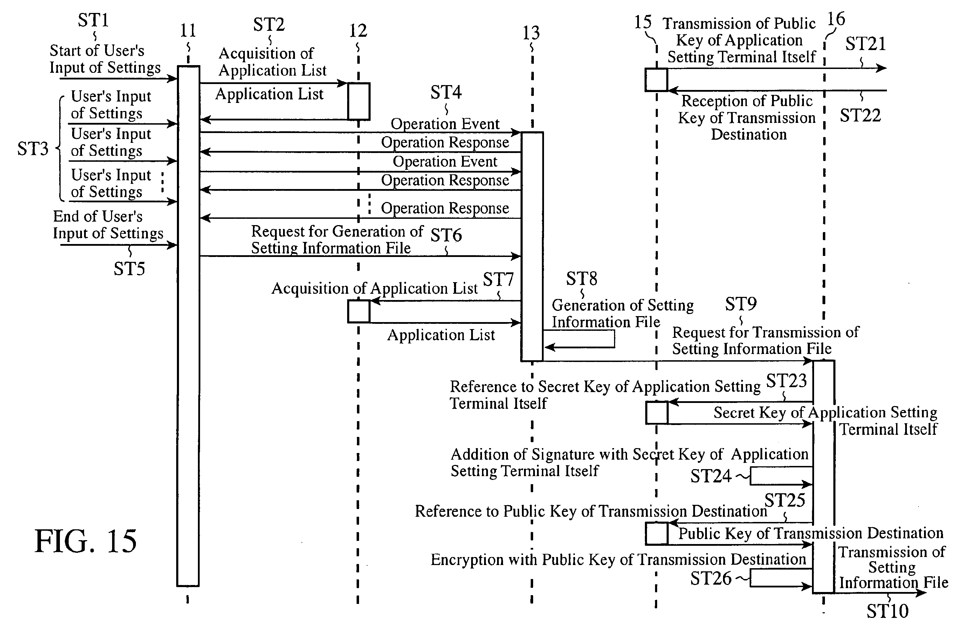

Fig. 15 is a sequence diagram showing a process of making settings for an application and transmitting a setting information file having the settings to the application executing terminal 2, which is carried out by the application setting terminal 1.
In Fig. 15, because processes of steps ST1 to ST10 are the same as those of steps ST1 to ST10 shown in Fig. 4, the detailed explanation of the steps will be omitted hereafter.

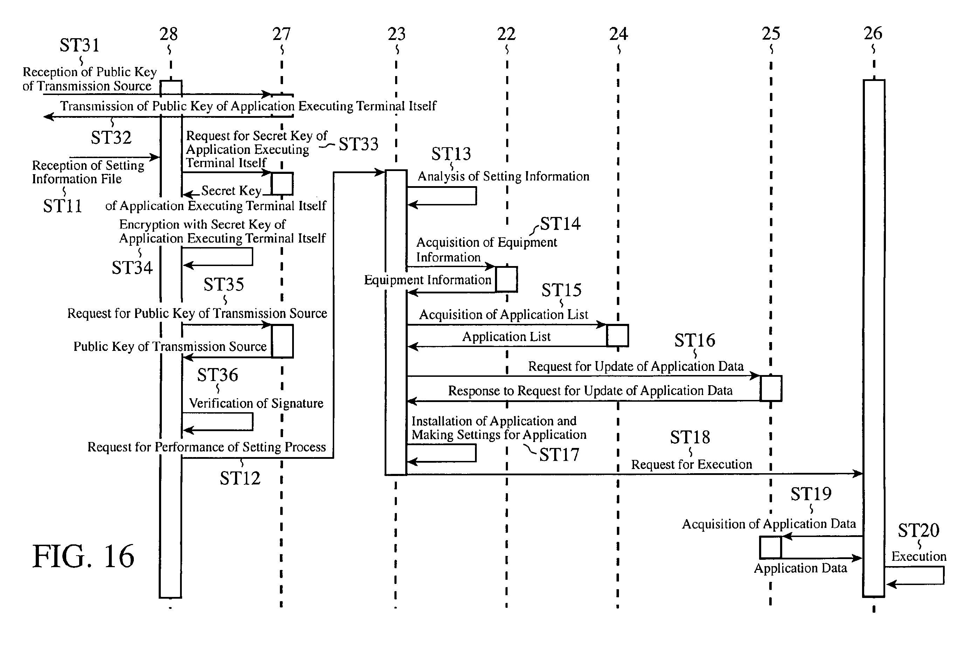

Fig. 16 is a sequence diagram showing a process of receiving the setting information file, making settings for the application and executing the application, which is carried out by the application executing terminal 2
In Fig. 16, because processes of steps ST11 to ST20 are the same as those of steps ST11 to ST20 shown in Fig. 9, the detailed explanation of the steps will be omitted hereafter.

The application setting terminal 1 and the application executing terminal 2 exchange their public keys between them before the application setting terminal 1 transmits the setting information file to the application executing terminal 2.
More specifically, the secret and public keys managing unit 15 of the application setting terminal 1 transmits the public key of the application setting terminal itself to the application executing terminal 2 (step ST21), and the secret and public keys managing unit 27 of the application executing terminal 2 receives the public key of the application setting terminal 1 (step ST31).
On the other hand, the secret and public keys managing unit 27 of the application executing terminal 2 transmits the public key of the application executing terminal itself to the application setting terminal 1 (step ST32), and the secret and public keys managing unit 15 of the application setting terminal 1 receives the public key of the application executing terminal 2 (step ST22).

When transmitting the setting information file generated by the setting information generating unit 13 to the application executing terminal 2, the setting information transmitting unit 16 of the application setting terminal 1 refers to the secret key of the application setting terminal itself managed by the secret and public keys managing unit 15 (step ST23) and adds the signature to the setting information file (step ST24).
Next, the setting information transmitting unit 16 refers to the public key of the application executing terminal 2 (step ST25) and encrypts the setting information file (step ST26). When encrypting the setting information file with the signature, the setting information transmitting unit 16 transmits the encrypted setting information file to the application executing terminal 2 (step ST10).
The other processes carried out by the application setting terminal 1 are the same as those of above-mentioned Embodiment 1.

When receiving the setting information file transmitted thereto from the application setting terminal 1 (step 11), the setting information receiving unit 28 of the application executing terminal 2 refers to the secret key of the application executing terminal itself managed by the secret and public keys managing unit 27 (step ST33) and decrypts the setting information file (step ST34).
Next, the setting information receiving unit 28 refers to the public key of the application setting terminal 1 (step ST35) and verifies the signature added to the setting information file (step ST36).
The other processes carried out by the application executing terminal 2 are the same as those of above-mentioned Embodiment 1.

As can be seen from the above description, in accordance with this embodiment 2, the application setting terminal 1 is constructed in such a way as to encrypt the setting information file which the application setting terminal is going to transmit to the application executing terminal 2, and the application executing terminal 2 is constructed in such a way as to verify the signature added to the setting information file. Therefore, even in a case in which the application setting terminal 1 transmits the setting information file to the application executing terminal 2 via a network, this embodiment provides an advantage of being able to prevent the setting information file from being tampered and tapped during communications.

In a case in which there are two or more application executing terminals 2 each of which exchanges information with the application setting terminal 1, each of the application executing terminals 2 can hold information including its equipment ID (refer to the equipment information of Fig. 10) as a table in order to specify the public key and the application setting terminal 1, and the application setting terminal 1 transmits the setting information file by adding an equipment ID to the setting information file so that each of the application executing terminals can verify the setting information file by using the public key corresponding to the equipment ID.

### Embodiment 3.

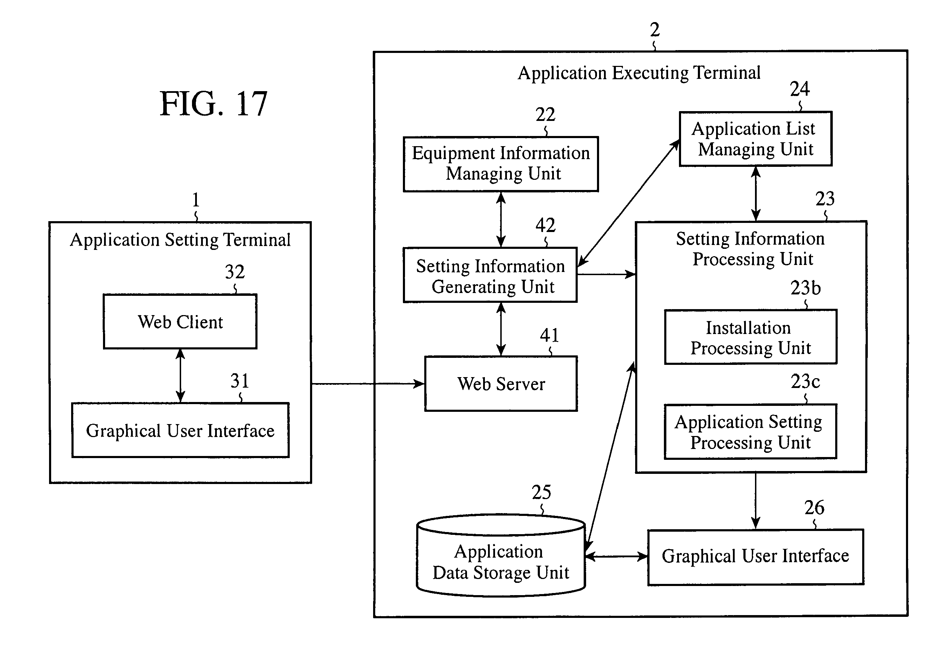

Fig. 17 is a block diagram showing an application setting terminal and an application executing terminal in accordance with Embodiment 2 of the present invention. In the figure, because the same reference numerals as those shown in Figs. 2 and 3 denote the same components or like components, the explanation of these components will be omitted hereafter.
A GUI 31 which is a graphical user interface is comprised of, for example, a man-machine I/F, such as a keyboard mouse, and a display unit, such as a liquid crystal display, and so on, and carries out a process of outputting an operation event indicating a user's setting operation (setting operation information) to a Web client 32, and also producing a setting screen display according to screen data outputted from the Web client 32.
The Web client 32 carries out a process of connecting with a Web server 41 of the application executing terminal 2 and then transmitting the operation event outputted from the GUI 31 to the Web client 32, and also receiving the screen data about a setting screen transmitted from the Web client 32 and then outputting the screen data to the GUI 31.

The Web server 41 carries out a process of, when receiving the operation event transmitted from the Web client 32 of the application setting terminal 1, outputting the operation event to a setting information generating unit 42, and also transmitting the screen data about the setting screen outputted from the setting information generating unit 42 to the Web client 32.
The setting information generating unit 42 is comprised of, for example, a semiconductor integrated circuit substrate, on which an MPU and so on are mounted, and so on, and accepts a selection of an application to be installed, an on-screen arrangement of the application, and settings made for the application according to the operation event outputted from the Web server 41, and outputs the screen data about the setting screen to the Web server 41 as a response to the operation. Furthermore, the setting information generating unit 42 carries out a process of acquiring the meta information about the application the selection of which the setting information generating unit 42 has accepted from an application list which is managed by an application list managing unit 24, and judging whether the application executing terminal can use the application thereon with reference to both the meta information about the application and the equipment information about the terminal managed by an equipment information managing unit 22.
An accepting means is comprised of the Web server 41 and the setting information generating unit 42, and an attribution information acquiring means and a judging means are comprised of the setting information generating unit 42.

Next, the operation of the application setting terminal and that of the application executing terminal will be explained.

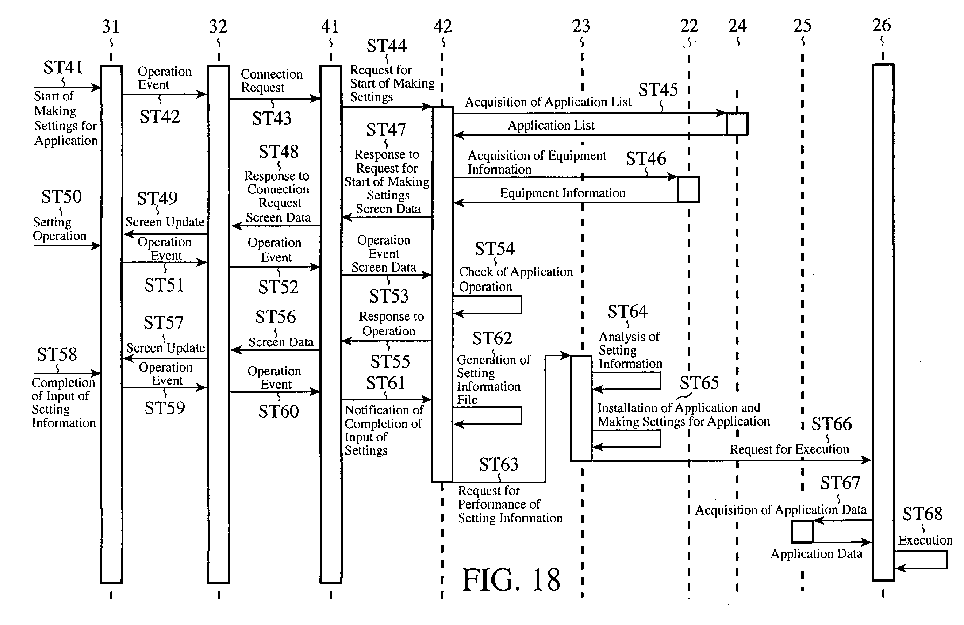

Fig. 18 is a sequence diagram showing a process of transmitting an operation event to the application executing terminal 2, which is carried out by the application setting terminal 1, and a process of making settings for an application and executing the application, which is carried out by the application executing terminal 2.

When a user operates the GUI 31 of the application setting terminal 1 to instruct the application setting terminal to start a setting operation of making settings for an application (step ST41), the GUI 31 outputs an operation event indicating a request to start the setting operation to the Web client 32 (step ST42).
When receiving the operation event indicating the request to start the setting operation from the GUI 31, the Web client 32 of the application setting terminal 1 transmits a request for connection to the Web server 41 of the application executing terminal 2 (step ST43).

When receiving the connection request from the Web client 32 of the application setting terminal 1, the Web server 41 of the application executing terminal 2 outputs a request to start making settings to the setting information generating unit 42 (step ST44).
When receiving the setting start request from the Web server 41, the setting information generating unit 42 of the application executing terminal 2 acquires the application list from the application list managing unit 24 (step ST45), and then acquires the equipment information from the equipment information managing unit 22 (step ST46).

Next, the setting information generating unit 42 outputs both a response to the setting start request and the screen data about the setting screen to the Web server 41 (step ST47).
When receiving both the response to the setting start request and the screen data about the setting screen from the setting information generating unit 42, the Web server 41 transmits a connection response and the screen data about the setting screen to the Web client 32 of the application setting terminal 1 (step ST48).

When receiving the connection response and the screen data about the setting screen from the Web server 41 of the application executing terminal 2, the Web client 32 of the application setting terminal 1 updates the setting screen by outputting the screen data about the setting screen to the GUI 31 (step ST49).
The GUI 31 displays the setting screen as shown in Fig. 6 on the screen according to the screen data outputted from the Web client 32.
The application list managed by the application list managing unit 24 of the application executing terminal 2 is displayed on the setting screen which is displayed by the GUI 31.
The user makes a selection of a desired application, carries out an arrangement of the application, and makes settings for the application on the setting screen by operating the GUI 31 (step ST50), as in the case of above-mentioned Embodiment .

The GUI 31 of the application setting terminal 1 then outputs an operation event indicating the user's operation information to the Web client 32 (step ST51).
When receiving the operation event indicating the user's operation information from the GUI 31, the Web client 32 of the application setting terminal 1 transmits the operation event to the Web server 41 of the application executing terminal 2 (step ST52).

When receiving the operation event indicating the user's operation information from the Web client 32 of the application setting terminal 1, the Web server 41 of the application executing terminal 2 outputs the operation event to the setting information generating unit 42 (step ST53).
When receiving the operation event indicating the user's operation information from the Web server 41, the setting information generating unit 42 of the application executing terminal 2 judges whether the application executing terminal can use the application which has been selected by the user thereon, like the judgment processing unit 23a in accordance with above-mentioned Embodiment 1 (refer to steps ST1102 and ST1103 of Fig. 11).
More specifically, the setting information generating unit 42 refers to the information about the selection of the application which is indicated by the operation event outputted from the Web server 41 to acquire the meta information about the application selected by the user from the application list which the setting information generating unit has acquired previously, and also refers to both the meta information about the application and the equipment information which the setting information generating unit has acquired previously to judge whether the application executing terminal can use the application thereon (step ST54).

When the application executing terminal can use the application which has been selected by the user thereon, the setting information generating unit 42 outputs the screen data about the setting screen on which the application is placed at the position set up by the user to the Web server 41 (step ST55) .
In contrast, when the application executing terminal cannot use the application which has been selected by the user thereon, the setting information generating unit disregards the user's setting operation, and produces a screen display to notify that the user cannot make any settings and also outputs the screen data about the setting screen on which the application is not placed at the position set up by the user to the Web server 41 (step ST55).
When receiving both a response to the operation and the screen data about the setting screen from the setting information generating unit 42, the Web server 41 transmits the screen data about the setting screen to the Web client 32 of the application setting terminal 1 (step ST56).

When receiving the screen data about the setting screen from the Web server 41 of the application executing terminal 2, the Web client 32 of the application setting terminal 1 updates the setting screen by outputting the screen data about the setting screen to the GUI 31 (step ST57).
The GUI 31 displays the setting screen on the screen according to the screen data outputted from the Web client 32.

When the user operates the GUI 31 so as to instruct the application setting terminal to end the setting operation of making settings for the application (step ST58), the GUI 31 outputs an operation event indicating the completion of the setting operation to the Web client 32 (step ST59).
When receiving the operation event indicating the completion of the setting operation from the GUI 31, the Web client 32 transmits the operation event to the Web server 41 of the application executing terminal 2 (step ST60).

When receiving the operation event indicating the completion of the setting operation from the Web client 32 of the application setting terminal 1, the Web server 41 of the application executing terminal 2 notifies the completion of the setting operation to the setting information generating unit 42 (step ST61).
When receiving the notification of the completion of the setting operation from the Web server 41, the setting information generating unit 42 of the application executing terminal 2 generates a setting information file, like the setting information generating unit 13 of Fig. 2 (step ST62).
As an alternative, the setting information generating unit 42 in accordance with this Embodiment 2 can temporarily store the operation event indicating the user's operation information without generating any setting information file, and output the user's operation information to the setting information processing unit 23.

When generating the setting information file, the setting information generating unit 42 issues a setting information execution request to the setting information processing unit 23 (step ST63).
When receiving the setting information execution request from the setting information generating unit 42, the setting information processing unit 23 analyzes the setting information file (corresponding to step ST64 and step ST13 of Fig. 9), and performs installation of an application and a process of making settings for the application (corresponding to step ST65 and step ST16 of Fig. 9).
However, unlike in the case of step ST16 of Fig. 9, because the setting information processing unit makes settings for the application by using the application list managed by the application list managing unit 24 of the application executing terminal 2, the application data are not updated. Therefore, the update of the application data in step ST17 of Fig. 9 is not carried out.

When the setting information processing unit 23 completes the process of making settings for the application, and the GUI 26 then receives a request to execute the application from the setting information processing unit 23 (corresponding to step ST66 and step ST18 of Fig. 9) , the GUI 26 acquires the application data from the application data storage unit 25 (corresponding to step ST67 and step ST19 of Fig. 9).
When acquiring the application data from the application data storage unit 25, the GUI 26 executes the application and then displays it on the screen (corresponding to step ST68 and step ST20 of Fig. 9).

As can be seen from the above description, in accordance with this Embodiment 3, the application setting terminal can make settings for an application by using the Web server 41. Therefore, the present invention provides an advantage of being able to use a terminal equipped with the Web client 31 (e.g., a PC, a mobile phone, a DVD recorder, a digital terrestrial tuner, or a game machine) as the application setting terminal 1.
Furthermore, because the application setting terminal can perform a setting operation of making settings for an application after getting to know the equipment information of the application executing terminal 2 in advance, application settings made on the virtual screen can be faithfully reflected in the application executing terminal 2.

### Embodiment 4.

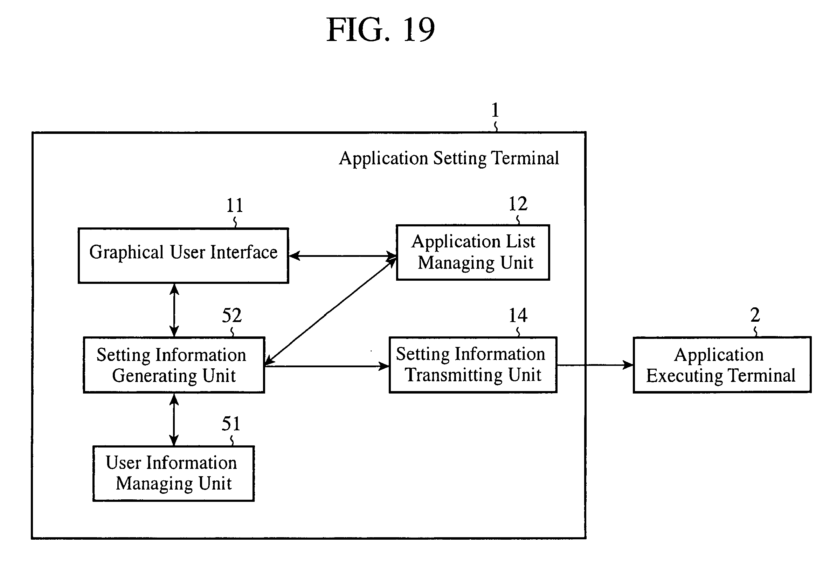

Fig. 19 is a block diagram showing an application setting terminal in accordance with Embodiment 4 of the present invention. In the figure, because the same reference numerals as those shown in Fig. 2 denote the same components or like components, the explanation of these components will be omitted hereafter.
A user information managing unit 51 manages user information (e.g., a user name, a user ID, and a user equipment ID) which specifies a user who uses the application setting terminal 1.
A setting information generating unit 52 generates a setting information file, like the setting information generating unit 13 of Fig. 2, while the setting information generating unit adds user information to the setting information file. The setting information generating unit 52 constructs a file generating means.

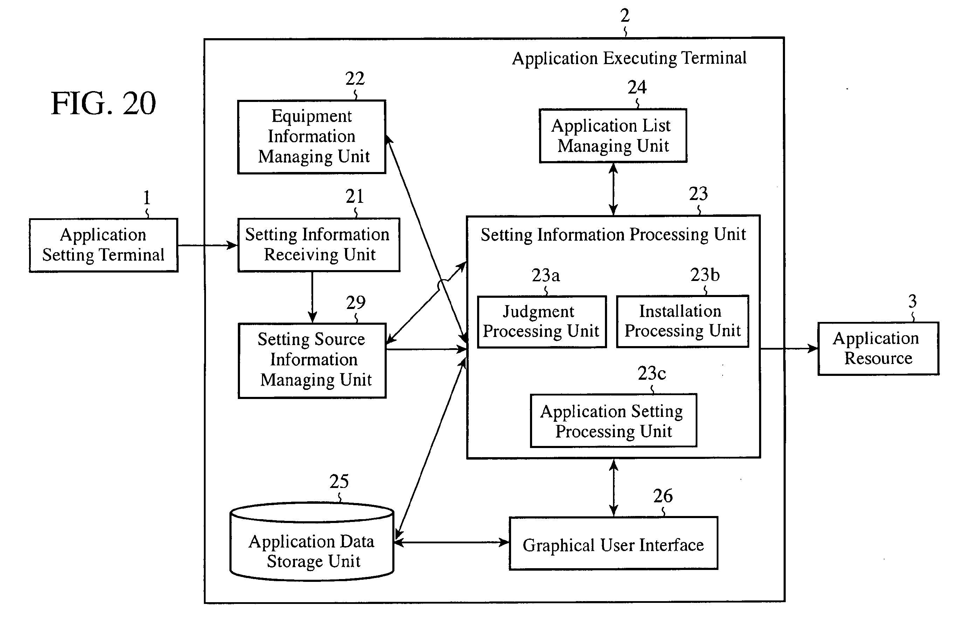

Fig. 20 is a block diagram showing an application executing terminal in accordance with Embodiment 4 of the present invention. In the figure, because the same reference numerals as those shown in Fig. 3 denote the same components or like components, the explanation of these components will be omitted hereafter.
A setting source information managing unit 29 holds both transmission source information (e.g., a user name, a user ID, and a user equipment ID) specifying the transmission source of the setting information file and setting authority information indicating setting authority to make settings which a user who uses the application setting terminal 1 has. When a setting information receiving unit 21 receives the setting information file, the setting source information managing unit 29 carries out a process of judging whether to provide a setting information processing unit 23 with the setting information file with reference to both the transmission source information and the setting authority information.

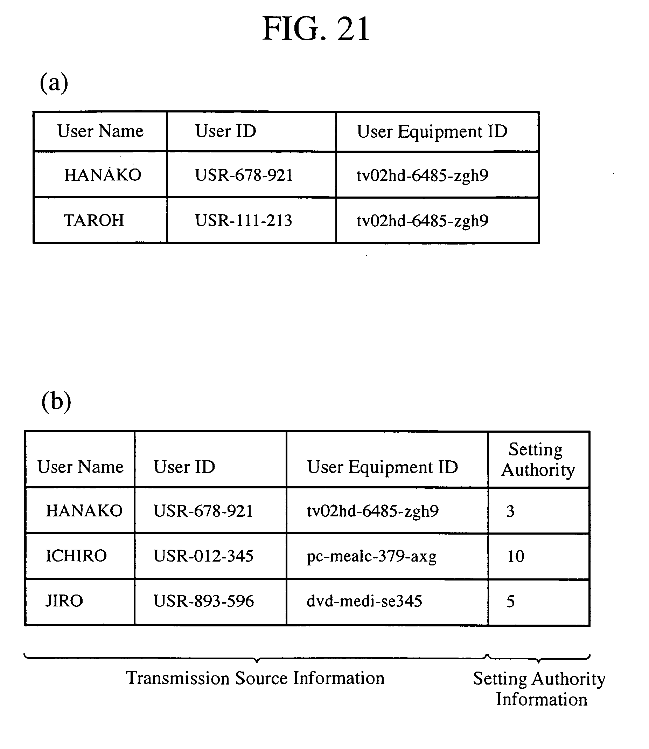

Fig. 21(a) is an explanatory drawing showing pieces of user information managed by the user information managing unit 51 of the application setting terminal 1, and Fig. 21 (b) is an explanatory drawing showing both the transmission source information and the setting authority information which are managed by the setting source information managing unit 29 of the application executing terminal 2.
Each "user name" of Fig. 21 (a) shows the name of a user who uses the application setting terminal 1, each "user ID" shows a specific ID assigned to the user who uses the application setting terminal 1, and each "user equipment ID" shows a specific ID assigned to the application setting terminal 1.

In Fig. 21 (a) , an example in which two users "HANAKO" and "TAROH" use the single application setting terminal 1 is shown.
In this case, although the user "HANAKO" has a user ID different from that of the user "TAROH", "tv02hd-6485-zgh9" is set as the user equipment ID common to the users.
Before settings are made for any application, it is necessary to set these pieces of user information to the user information managing unit 51.

Each "user name" of Fig. 21(b) shows the name of a user who is the maker of a setting information file received by the setting information receiving unit 21, each "User ID" shows a specific ID assigned to a user who is the maker of a setting information file, each "user equipment ID" shows a specific ID assigned to the application setting terminal 1 which is used by a user who is the maker of a setting information file, and each "setting authority" shows the setting authority which a user who uses the application setting terminal 1 has.

Three users "ICHIRO", "HANAKO", and "JIRO" are registered in the example shown in Fig. 21(b).
More specifically, in the example of Fig. 21 (b) , the user "HANAKO" is registered as setting source information as a result of the setting information receiving unit 21 of the application executing terminal 2 receiving a setting information file generated by the application setting terminal 1 whose user equipment ID is "tv02hd-6485-zgh9".
Furthermore, "3" is set as the setting authority of the user "HANAKO".

Next, the operation of the application setting terminal and that of the application executing terminal will be explained.

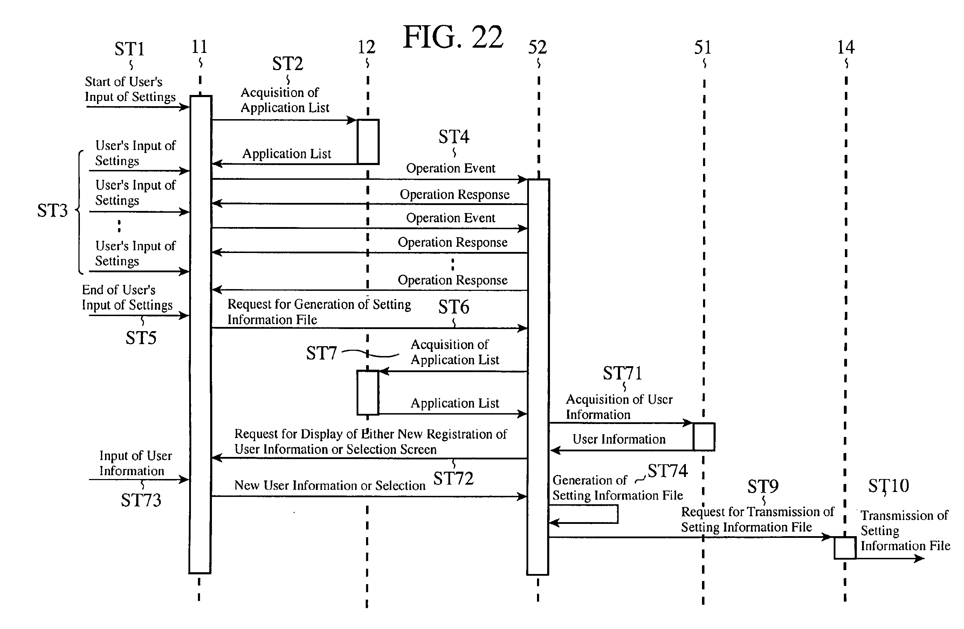

Fig. 22 is a sequence diagram showing a process of making settings for an application and transmitting a setting information file having the settings to the application executing terminal 2, which is carried out by the application setting terminal 1.

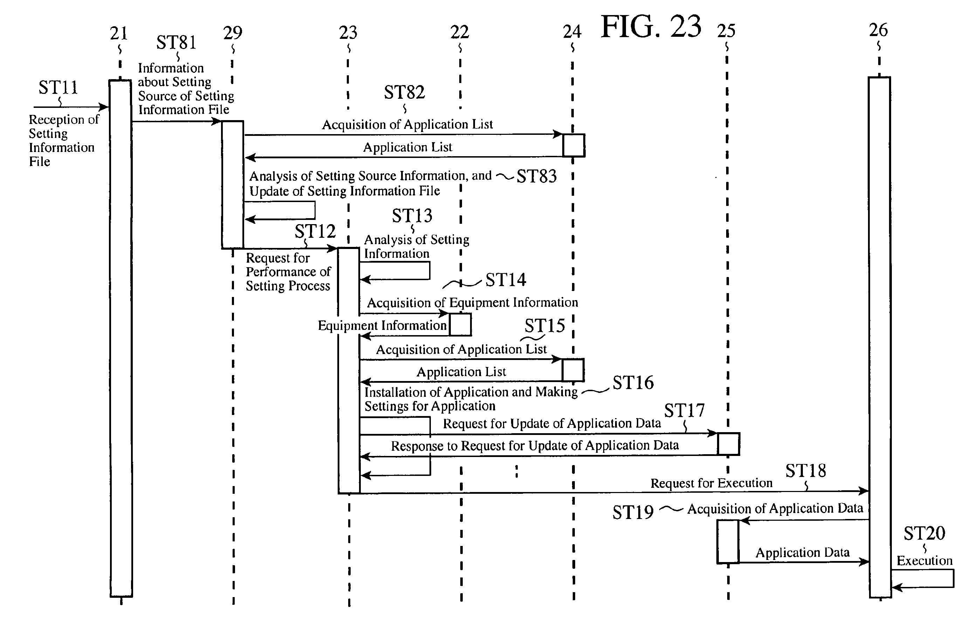

Fig. 23 is a sequence diagram showing a process of receiving the setting information file, and making settings for the application and executing the application, which is carried out by the application executing terminal 2.

In this Embodiment 4, as shown in Fig. 21(b), the application setting terminal 1 sets up the setting authority which each user who uses the application setting terminal 1 has.
In an example in which a setting authority value corresponding to each user's setting authority is defined as a value ranging from its minimum value of 1 to its maximum of 10, the application setting terminal sets the setting authority value of an application which handles personal information to, for example, its maximum value "10", and sets the setting authority value of an application having a low risk, such as a game application, to, for example, its minimum value "1".
It is assumed that each user and the setting equipment can make settings for an application as long as each user and the setting equipment have setting authority corresponding to a value equal to or larger than the setting authority value of the application. This setting authority value is described in an application list.

In the example of Fig. 21 (b) , the setting authority values range from 1 to 10, and the setting authority of the user "ICHIRO" is "10". Because "10" is the maximum, the user "ICHIRO" can make settings for any application.
In contrast, because the setting authority of the user "HANAKO" is "3", the user "HANAKO" can make settings for only some limited applications. The setting authority can be alternatively set up not for each user but for each equipment.

An operation of acquiring the application list from an application list managing unit 12 by using the setting information generating unit 52 (step ST7) after a user has operated a GUI 11 of the application setting terminal 1 so as to instruct the application setting terminal to start an input of settings for an application (step ST1) is the same as that of above-mentioned Embodiment 1.
When acquiring the application list from the application list managing unit 12 in the above-mentioned way, the setting information generating unit 52 acquires the user information from the user information managing unit 51 (step ST71).

The setting information generating unit 52 then issues a request for display of either new registration of user information or a user selection screen for specifying the maker of a setting information file to be transmitted from the pieces of already-registered user information to the GUI 11 (step ST72).
In the case of new registration of user information, a user operates the GUI 11 on the user selection screen so as to input his or her user name and user ID.
In contrast, in the case of selecting registered user information, because the pieces of already-registered user information (e.g., the user names) are displayed on the user selection screen, a user operates the GUI 11 on the user selection screen so as to select the corresponding user information (step ST73).
As an alternative, when the user starts operating the application setting terminal 1, the application setting terminal 1 can automatically select the corresponding user information in advance.

Next, the setting information generating unit 52 generates a setting information file including the meta information about the application selected by the user, the information about the operation (the on-screen arrangement of the application and the setting information about the application) which have been stored temporarily, and the user information newly registered or the selected user information (a user name, a user ID, and a user equipment ID) (step ST74) .
When generating the setting information file, the setting information generating unit 52 outputs the setting information file to a setting information transmitting unit 14 and also issues a request for transmission of the setting information file to the setting information transmitting unit 14 (step ST9) , like that of above-mentioned Embodiment 1.
When receiving the request for transmission of the setting information file from the setting information generating unit 13, the setting information transmitting unit 14 transmits the setting information file to the application executing terminal 2 (step ST10), like that of above-mentioned Embodiment 1.

When receiving the setting information file transmitted thereto from the application setting terminal 1 (step ST11), a setting information receiving unit 21 of the application executing terminal 2 outputs the setting information file to the setting source information managing unit 29 (step ST81).
When receiving the setting information file from the setting information receiving unit 21, the setting source information managing unit 29 acquires an application list from an application list managing unit 24 (step ST82).

The setting source information managing unit 29 then extracts the user information (the user name, the user ID, and the user equipment ID) included in the setting information file, and acquires the setting authority value corresponding to the user information from the setting source information (refer to Fig. 21 (b)) which the setting source information managing unit has held beforehand.
For example, when the user ID included in the user information is "USR-678-921", the setting source information managing unit acquires the setting authority value "3" of the user "HANAKO".

When checking the setting authority value corresponding to the user information, the setting source information managing unit 29 compares the setting authority value with the setting authority value of each application described in the application list so as to identify applications which can be executed by the application executing terminal.
When acquiring executable applications, the setting source information managing unit 29 deletes applications except the applications which are identified as executable applications from among the applications described in the setting information file to update the setting information file (step ST83).
When receiving a setting information file from an unregistered setting source, the setting source information managing unit notifies that it has received the setting information file from an unregistered user on the screen of the application executing terminal 2, and then accepts a setup of the setting authority on the screen. This setup can be changed at a later time.

When completing the update of the setting information file, the setting source information managing unit 29 outputs the updated setting information file to the setting information processing unit 23 and also issues a request to perform a setting process of making settings for each of the executable applications to the setting information processing unit 23 (step ST12).
Because processes of step ST13 and subsequent steps are the same as those of above-mentioned Embodiment 1, the explanation of the processes will be omitted hereafter.

As can be seen from the above description, in accordance with this embodiment 4, the application executing terminal is constructed in such a way as to, only when the transmission source of the setting information file received by the setting information receiving unit 21 is an application setting terminal 1 which is registered in advance, refer to the meta information about an application included in the setting information file and install the application therein. Therefore, the present embodiment offers an advantage of being able to stop the installation of any application when the transmission source of the setting information file cannot be trusted.
More specifically, because the application executing terminal is constructed in such a way as to put restrictions on whether settings can be made for an application by using the user information of the setting source, the present embodiment offers an advantage of being able to carry out the setting process of making settings for an application by automatically judging whether or not the setting process has been triggered by an authorized user's setting operation.

In addition, in accordance with this Embodiment 4, because the application executing terminal is constructed in such a way as to hold setting authority information indicating the setting authority which a user using an application setting terminal 1 has and put restrictions on which setting can be made for an application according to the setting authority information, there is provided an advantage of being able to refuse settings for an application which are made by any user who does not have the setting authority.
More specifically, in a case in which the application executing terminal 2 is connected to a network and is placed in a state in which the application executing terminal 2 can receive a setting information file from any of many pieces of unspecified equipment, the application executing terminal can restrict the reception of a setting information file only to from specific users or specific equipment by setting the setting authority of any unregistered setting source to the minimum value (i.e. by refusing a setting information file transmitted from any unregistered setting source).

### Embodiment 5.

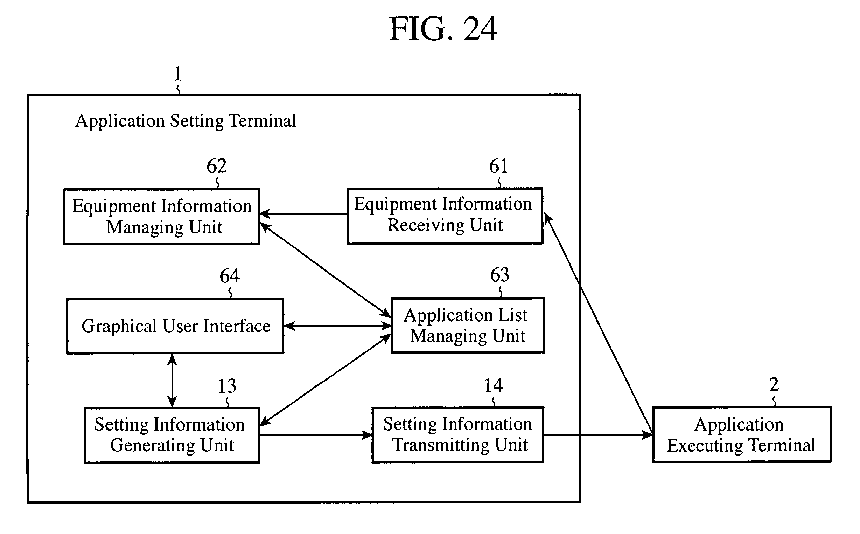

Fig. 24 is a block diagram showing an application setting terminal in accordance with Embodiment 5 of the present invention. In the figure, because the same reference numerals as those shown in Fig. 2 denote the same components or like components, the explanation of these components will be omitted hereafter.
An equipment information receiving unit 61 is comprised of, for example, a communication MODEM and so on, and carries out a process of receiving equipment information about an application executing terminal 2. The equipment information receiving unit 61 constructs an equipment information collecting means.
An equipment information managing unit 62 manages the equipment information about the application executing terminal 2 received by the equipment information receiving unit 61.

An application list managing unit 63 carries out a process of managing an application list, like the application list managing unit 12 of Fig. 2, and also referring to the equipment information about the application executing terminal 2 managed by the equipment information managing unit 62 so as to judge whether each application described in the application list satisfies conditions on which the application executing terminal 2 executes each application, and specify an application which the application executing terminal 2 can use thereon. The application list managing unit 63 constructs an attribution information managing means and a usable application specifying means.

A GUI 64 which is a graphical user interface carries out a process of accepting a user's operation, like the GUI 11 of Fig. 2, though the GUI 64 accepts a selection of only an application which is determined to be an application that can be used on the application executing terminal 2 by the application list managing unit 63. The GUI 64 constructs an accepting means.

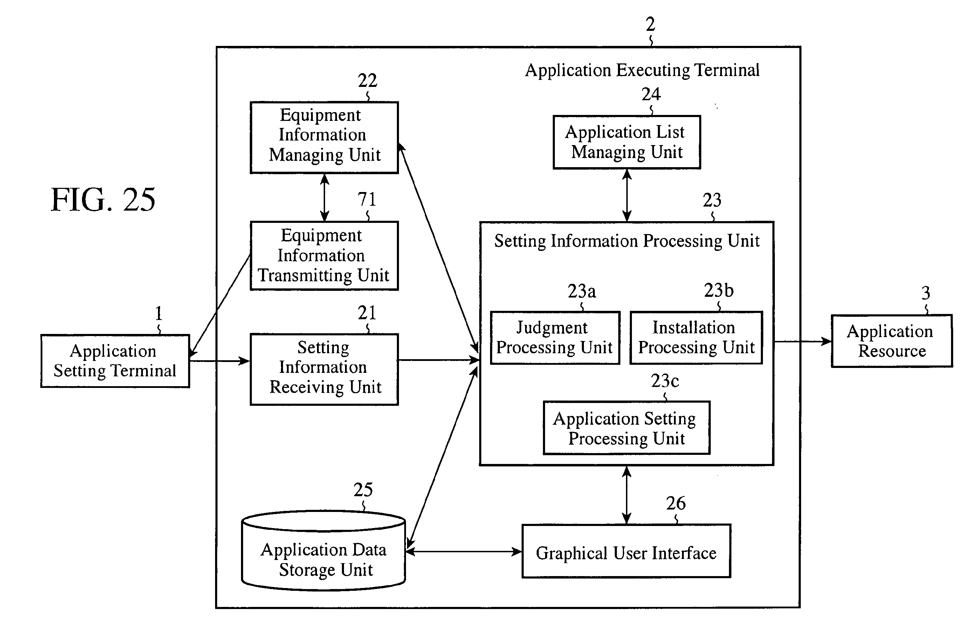

Fig. 25 is a block diagram showing the application executing terminal in accordance with Embodiment 5 of the present invention. In the figure, because the same reference numerals as those shown in Fig. 3 denote the same components or like components, the explanation of these components will be omitted hereafter.
An equipment information transmitting unit 71 is comprised of, for example, a communication MODEM and so on, and carries out a process of transmitting the equipment information about the application executing terminal itself managed by an equipment information managing unit 22 (e.g., an equipment name, an equipment ID, a MAC Address, an S/W platform version, and device information) to the application setting terminal 1.

Next, the operation of the application setting terminal and that of the application executing terminal will be explained.

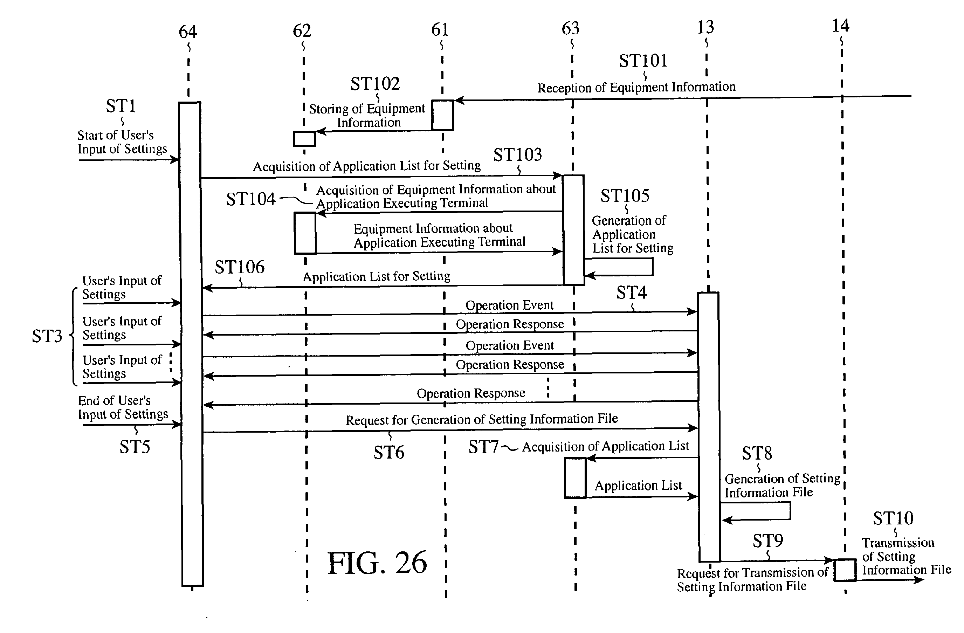

Fig. 26 is a sequence diagram showing a process of making settings for an application and transmitting a setting information file having the settings to the application executing terminal 2, which is carried out by the application setting terminal 1.

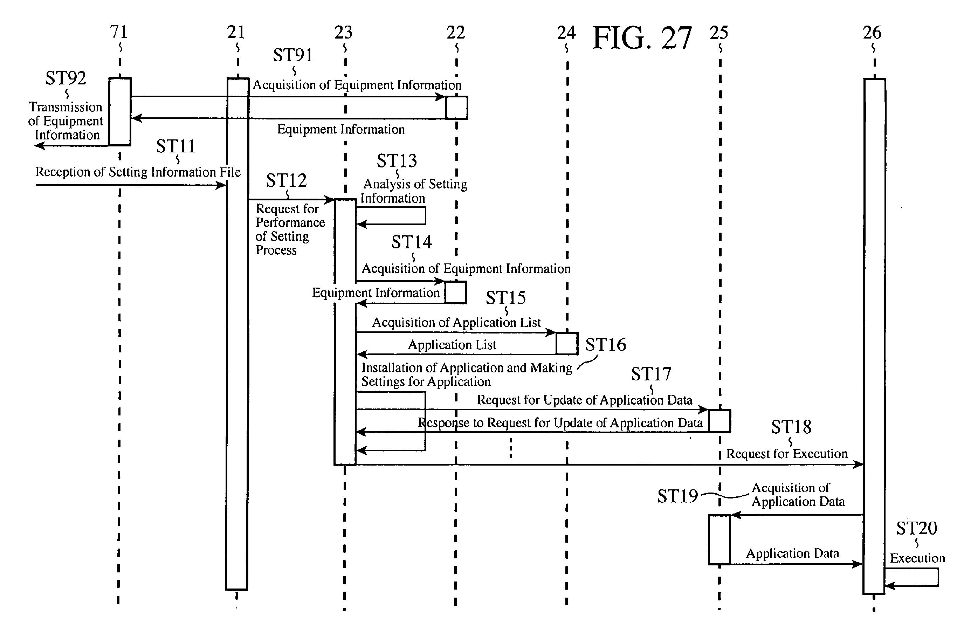

Fig. 27 is a sequence diagram showing a process of receiving the setting information file after transmitting the equipment information, and making settings for the application and executing the application, which is carried out by the application executing terminal 2.

The equipment information transmitting unit 71 of the application executing terminal 2 acquires the equipment information about the application executing terminal itself (e.g., the equipment name, the equipment ID, the MAC Address, the S/W platform version, and the device information) from the equipment information managing unit 22 (step ST91), and then transmits the equipment information to the application setting terminal 1 (step ST92).
The equipment information receiving unit 61 of the application setting terminal 1 receives the equipment information about the application executing terminal 2 transmitted from the application executing terminal 2 (step ST101), and then stores the equipment information in the equipment information managing unit 62 (step ST102).

When a user operates the GUI 64 of the application setting terminal 1 so as to instruct the application setting terminal to start an input of settings for an application (step ST1), the GUI 64 issues a request for acquisition of the application list for setting to the application list managing unit 63 (step ST103).
When receiving the request for acquisition of the application list for setting from the GUI 64, the application list managing unit 63 acquires the equipment information about the application executing terminal 2 from the equipment information managing unit 62 (step ST104).

Next, the application list managing unit 63 refers to the equipment information about the application executing terminal 2 (e.g., the equipment name, the equipment ID, the MAC Address, the S/W platform version, and the device information) so as to judge whether each application described in the application list satisfies conditions on which the application executing terminal 2 executes each application.
The application list managing unit can carry out the process of judging whether each application satisfies conditions on which the application executing terminal 2 executes each application by simply carrying out, for example, the same processes as those of step ST1102 and ST1103 of Fig. 11 by the judgment processing unit 23a.

When judging whether each application satisfies conditions on which the application executing terminal 2 executes each application, the application list managing unit 63 generates an application list for setting showing applications which can be used on the application executing terminal 2 (step ST105), and outputs the application list for setting to the GUI 64 (step ST106).

When receiving the application list for setting from the application list managing unit 63, the GUI 64 carries out a process of accepting a user's operation, like the GUI 11 of Fig. 2, though the GUI 64 does not accept any selection of an application which is not listed in the application list for setting, but accepts a selection of an application only when this application is listed in the application list, unlike the GUI 11 of Fig. 2.
Because processes of step ST3 and subsequent steps are the same as those of above-mentioned Embodiment 1, the explanation of the processes will be omitted hereafter.

As can be seen from the above description, in accordance with this Embodiment 5, because the application list managing unit 63 of the application setting terminal 1 is constructed in such a way as to specify an application which can be used on the application executing terminal 2, and the GUI 64 is constructed in such a way as to accept a selection of an application only when the application can be used on the application executing terminal, there is provided an advantage of being able to prevent the application setting terminal 1 from carrying out a useless setting process such as a process of making settings for an application which the application executing terminal 2 cannot use thereon.
Therefore, settings which are made by the application setting terminal 1 can be faithfully reflected in the application executing terminal 2. Furthermore, by acquiring the resolution of the application executing terminal 2 which is a piece of device information of the application executing terminal 2 in advance, the application setting terminal can set up how each application is displayed on the screen, like the arrangement and size of each application, more correctly.

### Embodiment 6.

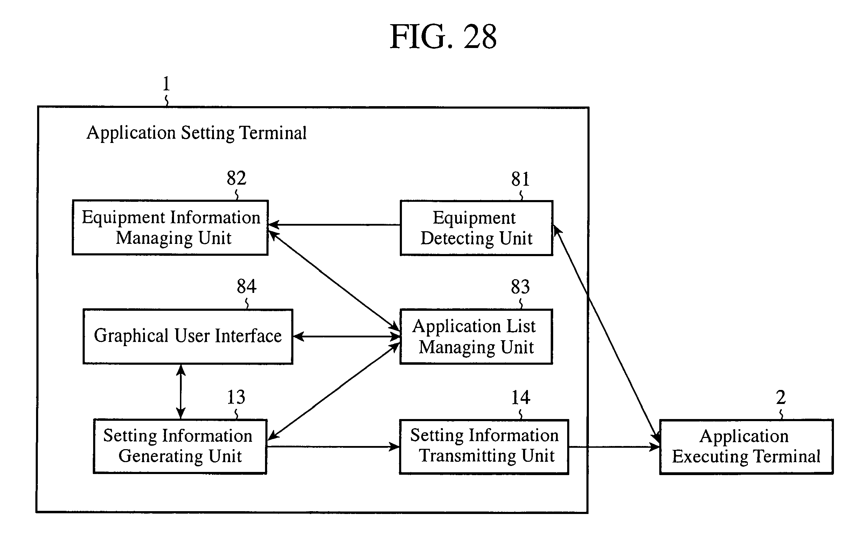

Fig. 28 is a block diagram showing an application setting terminal in accordance with Embodiment 6 of the present invention. In the figure, because the same reference numerals as those shown in Fig. 2 denote the same components or like components, the explanation of these components will be omitted hereafter.
An equipment detecting unit 81 is comprised of, for example, a communication MODEM and so on, and carries out a process of, in order to detect an application executing terminal 2 connected to a network, multicast-transmitting a message for equipment detection to the network all at once, and receiving, as a response message, the network address of and the equipment information about each application executing terminal 2 which has received the message for equipment detection from each application executing terminal 2. The equipment detecting unit 81 constructs a terminal detecting means.
An equipment information managing unit 82 manages the equipment information about each application executing terminal 2 which is received by the equipment detecting unit 81.

An application list managing unit 83 carries out a process of managing an application list, like the application list managing unit 12 of Fig. 2, and also referring to the equipment information about each application executing terminal 2 so as to generate an application list for setting for an application executing terminal 2 which is a target to which the application setting terminal will make settings for an application.
A GUI 84 which is a graphical user interface carries out a process of accepting a user's operation, like the GUI 11 of Fig. 2, though the GUI 84 accepts a selection of only an application listed in the application list for setting which is generated by the application list managing unit 83. The GUI 84 constructs an accepting means.

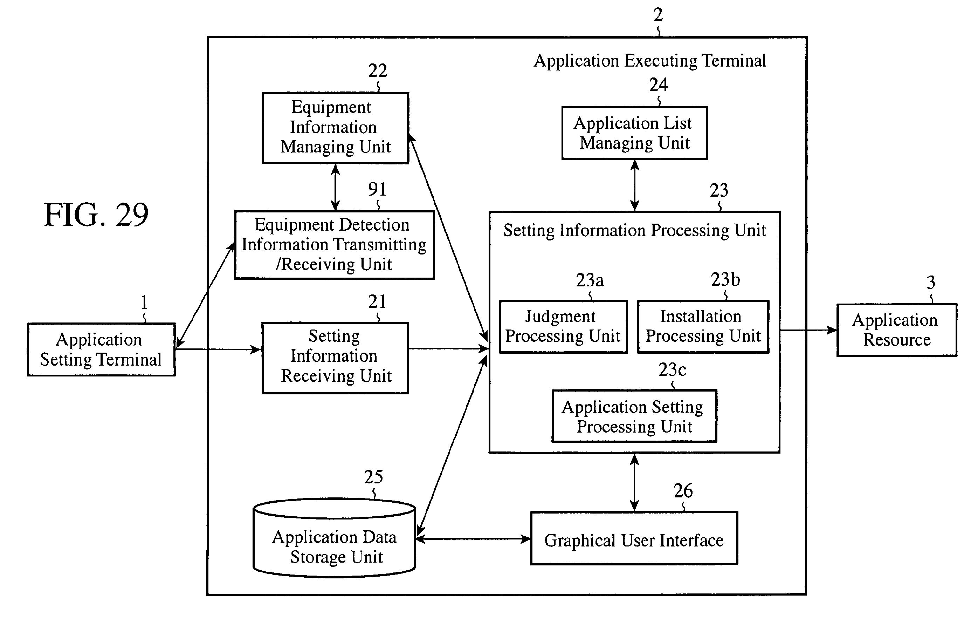

Fig. 29 is a block diagram showing an application executing terminal in accordance with Embodiment 6 of the present invention. In the figure, because the same reference numerals as those shown in Fig. 3 denote the same components or like components, the explanation of these components will be omitted hereafter.
An equipment detection information transmitting/receiving unit 91 carries out a process of, when receiving a message for equipment detection from the application setting terminal 1, adding the network address of the application executing terminal itself to its equipment information managed by an equipment information managing unit 23, and transmitting, as a response message to the message for equipment detection, the equipment information with the network address to the application setting terminal 1.

Next, the operation of the application setting terminal and that of an application executing terminal will be explained.

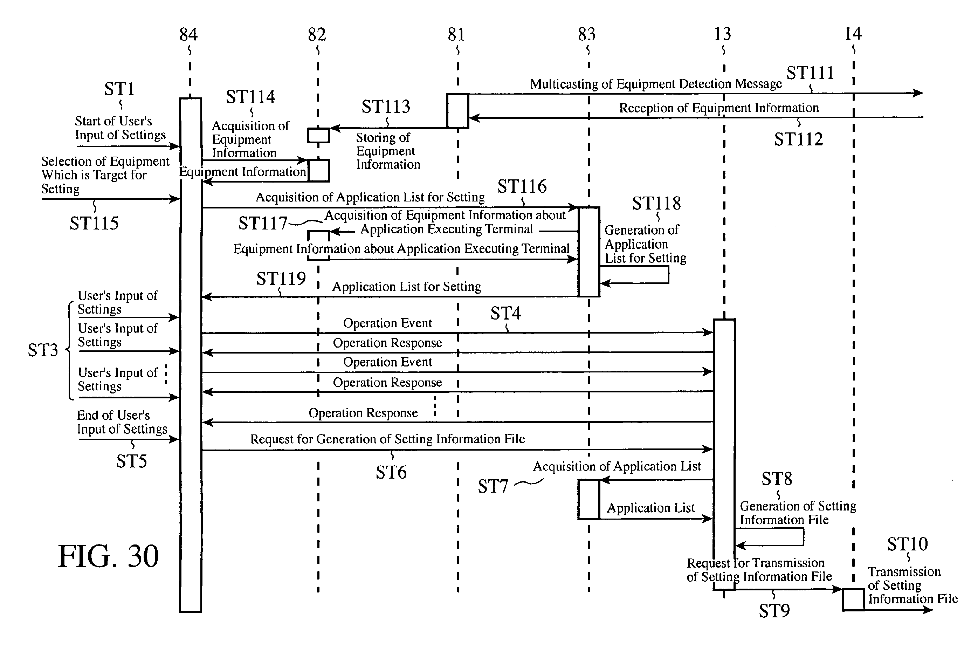

Fig. 30 is a sequence diagram showing a process of making settings for an application and transmitting a setting information file having the settings to the application executing terminal 2, which is carried out by the application setting terminal 1.

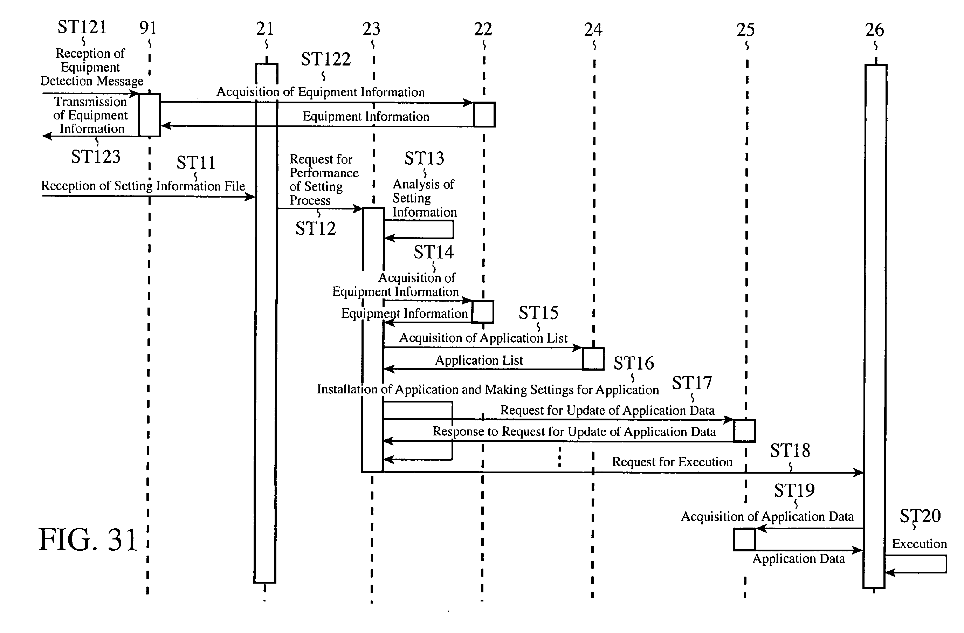

Fig. 31 is a sequence diagram showing a process of receiving the setting information file after transmitting the equipment information, and making settings for the application and executing the application, which is carried out by an application executing terminal 2.

The equipment detecting unit 81 of the application setting terminal 1 multicast-transmits a message for equipment detection to the network all at once in order to detect an application executing terminal 2 connected to the network before making settings for an application (step ST111).
The equipment detection information transmitting/receiving unit 91 of an application executing terminal 2 connected to the network receives the message for equipment detection multicast-transmitted from the application setting terminal 1 (step ST121).
When a plurality of application executing terminals 2 are connected to the network, each of the plurality of application executing terminals 2 receives the message for equipment detection.

When receiving the message for equipment detection, the equipment detection information transmitting/receiving unit 91 of an application executing terminal 2 acquires the equipment information about the application executing terminal itself from the equipment information managing unit 22 (step ST122), and adds the network address of the application executing terminal itself to the equipment information.
The equipment detection information transmitting/receiving unit 91 transmits, as a response message to the message for equipment detection, the equipment information with the network address to the application setting terminal 1 (step ST123).
When receiving the equipment information with the network address transmitted from the application executing terminal 2 (step ST112) , the equipment detecting unit 81 of the application setting terminal 1 stores the equipment information in the equipment information managing unit 82 (step ST113).

When a user operates the GUI 84 of the application setting terminal 1 so as to instruct the application setting terminal to start an input of settings for an application (step ST1), the GUI 84 acquires the equipment information from the equipment information managing unit 82 (step ST114), lists the names of all pieces of equipment described in the equipment information, and displays them on the screen.
As a result, when the user operates the GUI 84 to select equipment to which the user desires to make settings for an application from all the pieces of equipment displayed on the screen (step ST115), the GUI notifies selection information indicating the equipment to which the user desires to make settings for an application to the application list managing unit 83, and issues a request for generation of an application list for setting to the application list managing unit 83 (step ST116) .

When receiving both the selection information indicating the equipment to which the user desires to make settings for an application and the request for generation of an application list for setting from the GUI 84, the application list managing unit 83 acquires the equipment information about the equipment shown by the selection information from the equipment information managing unit 82 (step ST117).
Next, the application list managing unit 83 generates an application list for setting for the equipment to which the user desires to make settings for an application with reference to the equipment information about the equipment shown by the selection information (step ST118), and then outputs the application list for setting to the GUI 84 (step ST119).

When receiving the application list for setting from the application list managing unit 83, the GUI 84 carries out a process of accepting a user's operation, like the GUI 11 of Fig. 2, though the GUI 84 does not accept any selection of an application which is not listed in the application list for setting, but accepts a selection of an application only when this application is listed in the application list, unlike the GUI 11 of Fig. 2.
Because processes of step ST3 and subsequent steps are the same as those of above-mentioned Embodiment 1, the explanation of the processes will be omitted hereafter.
However, when transmitting the setting information file, a setting information transmitting unit 14 transmits the setting information file to the application executing terminal 2 with reference to the network address added to the equipment information which the setting information transmitting unit has received previously.

As can be seen from the above description, in accordance with this Embodiment 6, the application setting terminal is constructed in such a way as to detect an application executing terminal 2 connected to the network, and accept a selection of an application to be installed into the detected application executing terminal 2. Therefore, there is provided an advantage of being able to prevent the application setting terminal 1 from carrying out a useless setting process such as a process of making settings for an application to an application executing terminal 2 which is not connected to the network.
Furthermore, the user does not have to perform a registration and setting operation of registration and setting the equipment ID of any application executing terminal 2 and so on on the application setting terminal 1.

### Embodiment 7.

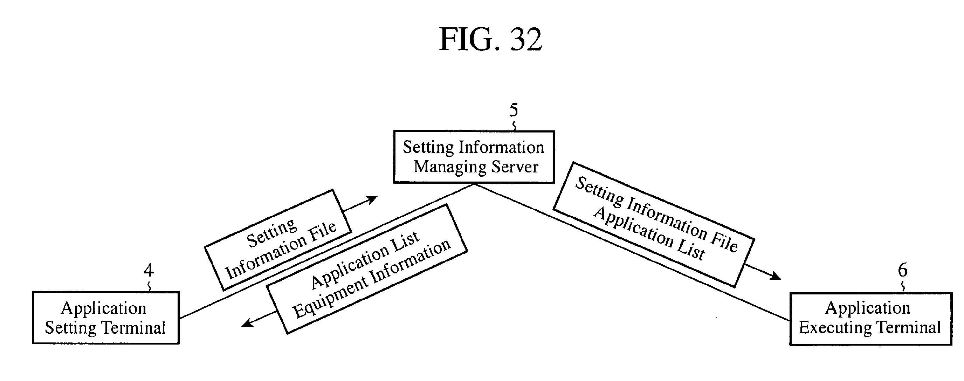

Fig. 32 is a block diagram showing a connection relation among an application setting terminal, a setting information managing server, and an application executing terminal in accordance with Embodiment 7 of the present invention.
In the figure, the application setting terminal 4 carries out a process of receiving both an application list and equipment information which are transmitted thereto from the setting information managing server 5, and generating a setting information file by using both the application list and the equipment information and then transmitting the setting information file to the setting information managing server 5.

The setting information managing server 5 carries out a process of transmitting both the application list and the equipment information to the application setting terminal 4, receiving the setting information file from the application setting terminal 4, and transferring the setting information file to the application executing terminal 6.
The application executing terminal 6 carries out a process of installing an application and making settings for the application according to the setting information file transferred thereto from the setting information managing server 5, and executes the application.

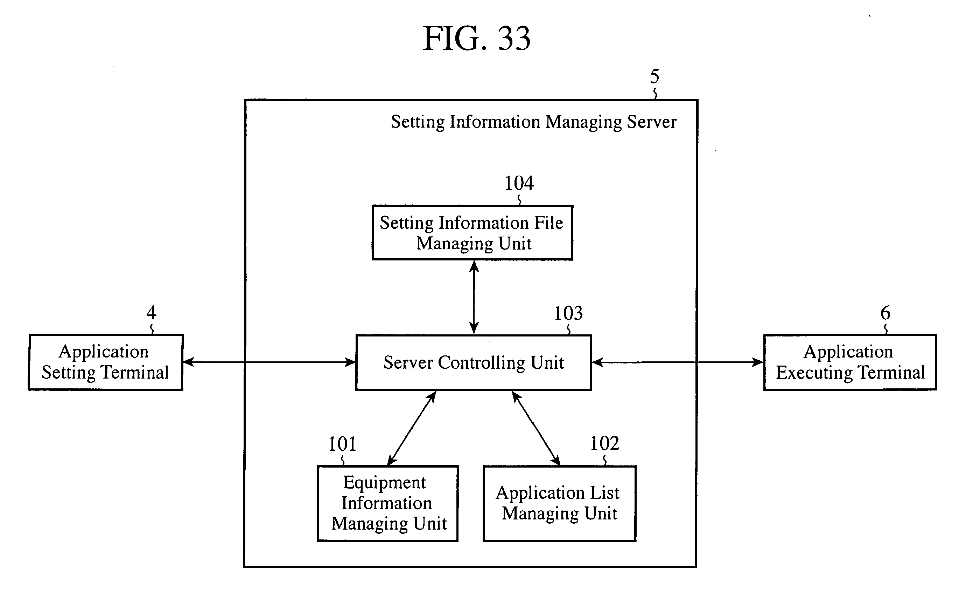

Fig. 33 is a block diagram showing the setting information managing server in accordance with Embodiment 7 of the present invention. In the figure, an equipment information managing unit 101 manages the equipment information about the application executing terminal 6. The equipment information managing unit 101 constructs an equipment information managing means.
For the application executing terminal 6 whose equipment information is managed by the equipment information managing unit 101, an application list managing unit 102 generates a list of applications which can be made to operate and a list of applications for setting from among all applications registered in the server, and manages the application lists. The application list managing unit 102 constructs an attribution information managing means.

The application list managing unit 102 generates the application list for setting by performing a filtering operation of comparing the requirements for installation and requirements for operation of each of all the applications registered in the server with the S/W platform and the device information which are included in the equipment information managed by the equipment information managing unit 102 so as to judge whether the application executing terminal satisfies the requirements of each of all the applications.
The application list managing unit 102 generates this application list when the server receives a request for transmission of the application list for setting from the application setting terminal 4 and the application executing terminal 6, and stores the application list while bringing it into correspondence with the equipment ID described in the equipment information. However, when there is an existing application list for setting in the application list managing unit 102, the application list managing unit 102 performs the filtering operation on only new applications which have been registered into the server since the existing application list was generated so as to update the application list. In contrast, when generating a new application list for setting, the application list managing unit performs the filtering operation on all the applications.

A server controlling unit 103 carries out a process of controlling each unit of the setting information managing server 5, and, when the application setting terminal 4 generates a setting information file, transmitting both the equipment information managed by the equipment information managing unit 101 and the application list managed by the application list managing unit 102 to the application setting terminal 4, receiving the setting information file from the application setting terminal 4, and transferring both the setting information file and the above-mentioned application list to the application executing terminal 6. The server controlling unit 103 constructs a file transferring means.
A setting information file managing unit 104 manages the setting information file received by the server controlling unit 103.

In accordance with this Embodiment 7, the application setting terminal 4 and the application executing terminal 6 need to exchange their equipment IDs for respectively specifying them with each other in advance.
As such a means of exchanging their equipment IDs, what is necessary is just to input the equipment IDs to the application setting terminal 4 and the application executing terminal 6, respectively, when an identical user uses the application setting terminal 4 and the application executing terminal 6. As an alternative, the application setting terminal and the application executing terminal can exchange their equipment IDs by using an external storage or the like.
When the user who uses the application setting terminal 4 differs from that who uses the application executing terminal 6, they have only to exchange the equipment IDs with each other by using a communications means, such as a telephone or an e-mail, or input the other parties' equipment IDs to the corresponding terminals, respectively. As an alternative, the application setting terminal and the application executing terminal can exchange data including the equipment IDs with each other by using an external storage.

Next, the operation of the application setting terminal, that of the setting information managing server, and that of the application executing terminal will be explained.

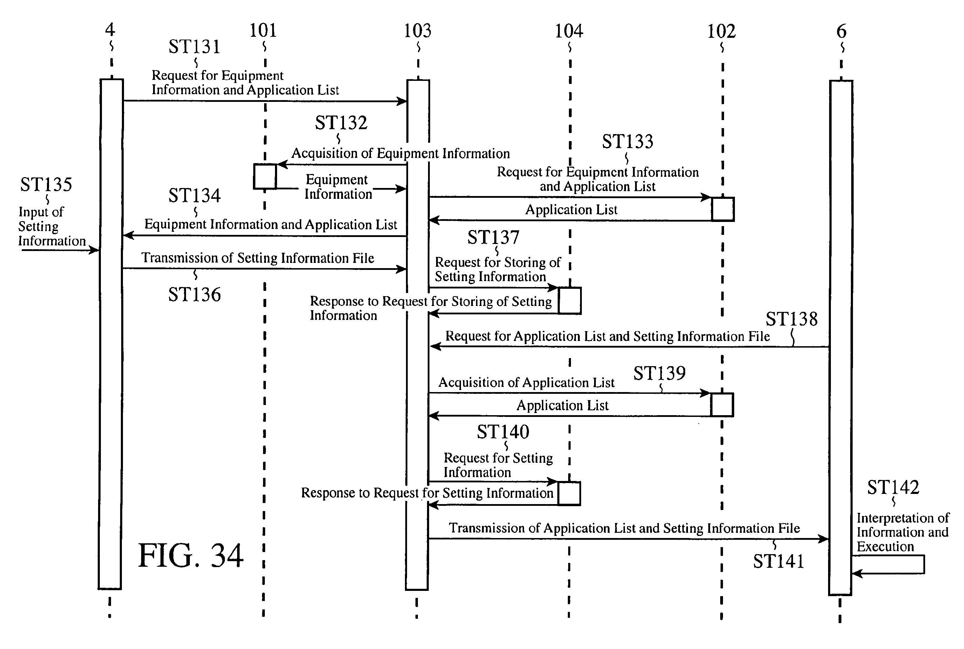

Fig. 34 is a sequence diagram showing processes carried out by the application setting terminal 4, the setting information managing server 5, and the application executing terminal 6.
Before making settings for an application to the application executing terminal, the application setting terminal 4 specifies the equipment ID of the application executing terminal 6 which is the target to which the application setting terminal makes settings for an application, and makes a request of the setting information managing server 5 for both the equipment information of the application executing terminal 6 and the application list (step ST131).

When receiving the request for transmission of both the equipment information and the application list from the application setting terminal 4, the server controlling unit 103 of the setting information managing server 5 acquires the equipment information of the equipment ID specified by the application setting terminal 4 from the equipment information managing unit 101 (step ST132).
Next, the server controlling unit 103 notifies the equipment ID which has been specified by the application setting terminal 4 to the application list managing unit 104, and makes a request of the application list managing unit for the application list (step ST133).

When receiving the request for the application list from the server controlling unit 103, the application list managing unit 104 carries out an update or generation of an application list about the equipment ID specified by the application setting terminal 4, and outputs the application list to the server controlling unit 103.
When receiving the application list from the application list managing unit 104, the server controlling unit 103 transmits both the application list and the equipment information which the server controlling unit has acquired previously to the application setting terminal 4 (step ST134).

When receiving both the application list and the equipment information from the server controlling part 103 of the setting information managing server 5, the application setting terminal 4 accepts a setting operation of making settings for an application to the application executing terminal (step ST135), and then generates a setting information file, like that of above-mentioned Embodiment 1.
The application setting terminal 4 then transmits the setting information file, the equipment ID of the application setting terminal itself, and the equipment ID of the application executing terminal 6 which is the target to which the application setting terminal makes settings for an application the setting information managing server 5 (step ST136).

When receiving both the two equipment IDs and the setting information file, the server controlling unit 103 of the setting information managing server 5 outputs both the two equipment IDs and the setting information file to the setting information file managing unit 104 (step ST137).
When receiving both the two equipment IDs and the setting information file from the server controlling unit 103, the setting information file managing unit 104 stores both the two equipment IDs and the setting information file therein while bringing them into correspondence with one another.
In this case, the equipment ID of the application setting terminal 4 is used in order to identify the generator of the setting information file, and the equipment ID of the application executing terminal 6 is used in order to judge for which equipment the setting information file has been generated.

In order to update the application list to the newest one by using the equipment ID of the application executing terminal itself, the application executing terminal 6 transmits the equipment ID of the application executing terminal itself to the setting information managing server 5 and then makes a request of the setting information managing server 5 for transmission of the application list, and also transmits the equipment ID of the application setting terminal 4 to the setting information managing server 5, and makes a request of the setting information managing server 5 for transmission of the setting information file (step ST138).

When receiving the request for transmission of the application list and the request for transmission of the setting information file, the server controlling unit 103 of the setting information managing server 5 acquires the application list corresponding to the equipment ID of the application executing terminal 6 from the application list managing unit 102 (step ST139), and also acquires the setting information file corresponding to the equipment IDs of the application setting terminal 4 and the application executing terminal 6 from the setting appliance information file managing unit 104 (step ST140) .
When there exist two or more setting information files corresponding to the equipment IDs, the server controlling unit of the setting information managing server acquires the newest setting information file.

When acquiring both the application list and the setting information file, the server controlling unit 103 of the setting information managing server 5 transmits both the application list and the setting information file to the application executing terminal 6 (step ST141).
When receiving both the application list and the setting information file from the setting information managing server 5, the application executing terminal 6 operates in the same way as that shown in above-mentioned Embodiment 1 (steps ST12 to ST20 of Fig. 9), and then makes settings for an application and executes the application (step ST142).

In performing processes of steps ST138 to ST141, the application executing terminal 6 makes a request of the setting information managing server 5 for transmission of both the application list and the setting information file, and the setting information managing server 5 then responds to the request.
The application executing terminal can issue this request by performing the operation of acquiring the user's setting information file. As an alternative, the application executing terminal 6 can automatically issue this request when the application executing terminal 6 starts operating.
As an alternative, when the setting information file in the setting information managing server 5 is updated by the application setting terminal 4, the setting information managing server 5 can transmit both the equipment ID and the setting information file to the application executing terminal 6. In this case, the application executing terminal 6 makes a request of the user for judgment of whether to update the settings by clearly showing on the screen of the application executing terminal 6 that the information about the application setting terminal 4 and the setting information have been updated.

The following merits are acquired by adding the setting information managing server 5 as shown in this Embodiment 7.
(1) The transmission of the equipment information from the application executing terminal 6 to the application setting terminal 4 can be eliminated because the setting information managing server 5 holds the equipment information of the application executing terminal 6.
(2) The application list of the application setting terminal 4 can be synchronized with that of the application executing terminal 6 because the setting information managing server 5 manages the application list. Accordingly, the user can select an application from the application list which always consists of a list of the latest versions of applications.

(3) It is not necessary to provide a channel used for exchanging data directly between the application setting terminal 4 and the application executing terminal 6 because any exchange of data between the application setting terminal and the application executing terminal does not have to be performed.
(4) In a case in which a plurality of setting information files are stored in the setting information managing server 5, they can be used for a plurality of application executing terminals 6.
(5) The application setting terminal 4 and the application executing terminal 6 do not have to be placed in an active state simultaneously because the timing at which the application setting terminal 4 and the application executing terminal 6 exchange the setting information file with the setting information managing server 5 can be arbitrary.

### Embodiment 8.

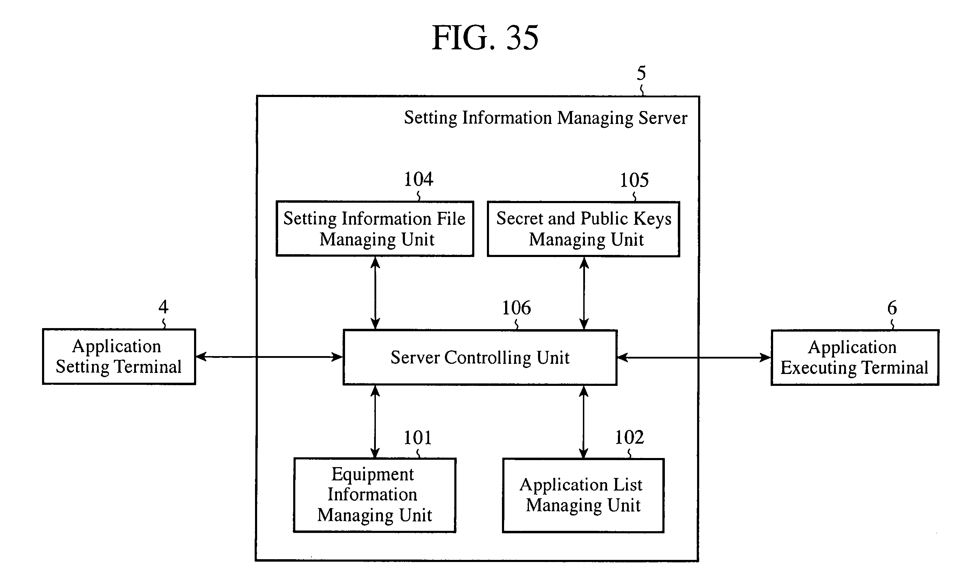

Fig. 35 is a block diagram showing a setting information managing server in accordance with Embodiment 8 of the present invention. In the figure, because the same reference numerals as those shown in Fig. 33 denote the same components or like components, the explanation of these components will be omitted hereafter.
A secret and public keys managing unit 105 manages the secret key and the public key of the setting information managing server 5, the public key of an application setting terminal 4, and the public key of an application executing terminal 6. The secret and public keys managing unit 105 manages the public key of each of the terminals while bringing the public key into correspondence with its equipment ID.
A server controlling unit 106 has the same function as that of the server controlling unit 103 of Fig. 33, and also has a function of checking the transmission source of a setting information file, and verifying whether the setting information file has been illegally altered.
The server controlling unit 106 constructs a file transferring means, and the secret and public keys managing unit 105 and the server controlling unit 106 construct a checking and verifying means.

Next, the operation of the application setting terminal, that of the setting information managing server, and that of the application executing terminal will be explained.

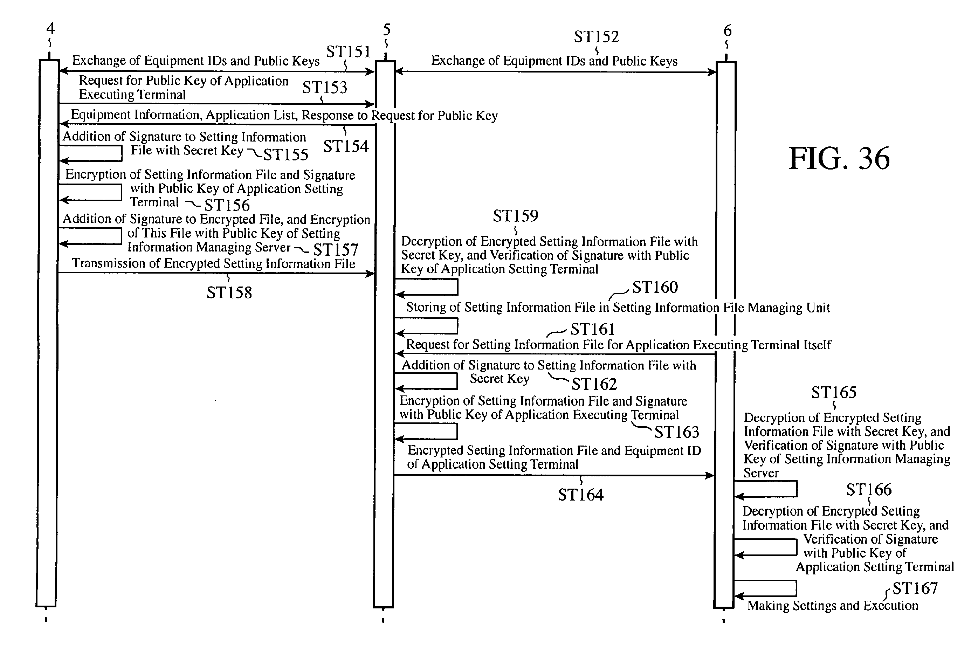

Fig. 36 is a sequence diagram showing processes carried out by the application setting terminal 4, the setting information managing server 5, and the application executing terminal 6.
This Embodiment 8 differs from above-mentioned Embodiment 7 in only a process of handling an electronic certificate, and therefore only this process will be explained hereafter.
In this Embodiment 8, the application setting terminal 4 corresponds to the application setting terminal 1, as shown in Fig. 13, in accordance with above-mentioned Embodiment 2, and the application executing terminal 6 corresponds to the application executing terminal 2, as shown in Fig. 14, in accordance with above-mentioned Embodiment 2.
More specifically, it is assumed that the application setting terminal 4 is equipped with a secret and public keys managing unit 15 as shown in Fig. 13 and so on, and the application executing terminal 6 is equipped with a secret and public keys managing unit 27 as shown in Fig. 14 and so on.
It is assumed that the application setting terminal 4 and the application executing terminal 6 have each other's equipment ID registered therein.

The secret and public keys managing unit 15 of the application setting terminal 4 and the secret and public keys managing unit 105 of the setting information managing server 5 transmit and receive each other's public key and equipment ID to and from each other (step ST151).
Furthermore, the secret and public keys managing unit 105 of the setting information managing server 5 and the secret and public keys managing unit 27 of the application executing terminal 6 transmit and receive each other's public key and equipment ID to and from each other (step ST152).
The secret and public keys managing units 15, 105, and 27 of the application setting terminal 4, the setting information managing server 5, and the application executing terminal 6 manage their respective public keys while bringing their respective public keys into correspondence with their respective equipment IDs.

A setting information transmitting unit 16 of the application setting terminal 4 (refer to Fig. 13) specifies the equipment ID of the application executing terminal 6 which is the target for which the application setting terminal makes settings of an application, and makes a request of the setting information managing server 5 for transmission of the public key of the application executing terminal 6, the equipment information about the application executing terminal 6, and the application list of the application executing terminal 6 (step ST153).
When receiving the above-mentioned transmission request from the application setting terminal 4, the server controlling unit 106 of the setting information managing server 5 refers to the equipment ID of the application executing terminal 6, acquires the public key of the application executing terminal 6 from the secret and public keys managing unit 105, acquires the equipment information about the application executing terminal 6 from the equipment information managing unit 101, and acquires the application list of the application executing terminal 6 from the application list managing unit 102.
The server controlling unit 106 then transmits the public key of the application executing terminal 6, the equipment information about the application executing terminal 6, and the application list of the application executing terminal 6 to the application setting terminal 4 (step ST154).

When receiving the public key of the application executing terminal 6, the equipment information about the application executing terminal 6, and the application list of the application executing terminal 6 from the server controlling unit 106 of the setting information managing server 5, the application setting terminal 4 accepts a setting operation of making settings of an application and generates a setting information file, like that of above-mentioned Embodiment 1.
When the setting information generating unit 13 generates the setting information file, the setting information transmitting unit 16 of the application setting terminal 4 adds a signature to the setting information file with reference to the secret key of the application setting terminal itself which is managed by the secret and public keys managing unit 15 (step ST155) .
The setting information transmitting unit 16 then encrypts the setting information file with reference to the public key of the application executing terminal 2 which is managed by the secret and public keys managing unit 15 (step ST156) .

When encrypting the setting information file with the signature, the setting information transmitting unit 16 further refers to the secret key of the application setting terminal itself which is managed by the secret and public keys managing unit 15 to add the signature to the setting information file and encrypt the setting information file with reference to the public key of the setting information managing server 5 (step ST157).
The setting information transmitting unit 16 then transmits both the encrypted setting information file and the equipment ID of the application executing terminal 6 to the setting information managing server 5 (step ST158).

When receiving both the encrypted setting information file and the equipment ID of the application executing terminal 6 from the application setting terminal 4, the server controlling unit 106 of the setting information managing server 5 refers to the secret key of the setting information managing server 5 which is managed by the secret and public keys managing unit 105 to decrypt the setting information file, and also refers to the public key of the application setting terminal 4 to verify the signature added to the setting information file (step ST159) .
When certifying, as a result of verifying the signature, that the data have not been altered on the way to the server, and the setting information file has been transmitted from an authorized transmission source, the server controlling unit 106 stores the setting information file in the setting information file managing unit 104 (step ST160).
However, the setting information file at that time is in a state in which the setting information file remains encrypted with the public key of the application executing terminal 6.

A setting information receiving unit 28 of the application executing terminal 6 (refer to Fig. 14) transmits both the equipment ID of the application executing terminal itself and the equipment ID of the application setting terminal 4 to the setting information managing server 5, and then makes a request of the setting information managing server 5 for transmission of the setting information file (step ST161).
When receiving the request for transmission of the setting information file from the application executing terminal 6, the server controlling unit 106 of the setting information managing server 5 acquires the setting information file corresponding to the equipment IDs of the application setting terminal 4 and the application executing terminal 6 from the setting information file managing unit 104.

The server controlling unit 106 refers to the secret key of the setting information managing server 5 which is managed by the secret and public keys managing unit 105 to add the signature to the setting information file (step ST162).
The server controlling unit 106 then refers to the public key of the application executing terminal 6 which is managed by the secret and public keys managing unit 105 to encrypt the setting information file with the signature (step ST163).

The server controlling unit 106 transmits both the encrypted setting information file and the equipment ID of the application setting terminal 4 to the application executing terminal 6 (step ST164).
At that time, instead of responding to the request from the application executing terminal 6, the server controlling unit can transmit both the encrypted setting information file and the equipment ID of the application setting terminal 4 to the application executing terminal 6 when the setting information file is updated by the application setting terminal 4, like that of above-mentioned Embodiment 7.

When receiving both the encrypted setting information file and the equipment ID of the application setting terminal 4 from the setting information managing server 5, the setting information receiving unit 28 of the application executing terminal 6 refers to the secret key of the application executing terminal itself which is managed by the secret and public keys managing unit 27 to decrypt the setting information file, and also refers to the public key of the setting information managing server 5 to verify the signature added to the setting information file (step ST165).
As a result of verifying the signature, the setting information receiving unit 28 verifies whether or not the data have been altered on the way to the application executing terminal and whether or not the transmission source of the setting information file is an authorized one.

When the data have not been altered on the way to the application executing terminal and the setting information file has been transmitted from an authorized transmission source, the setting information receiving unit 28 refers to the secret key of the application executing terminal itself which is managed by the secret and public keys managing unit 27 to decrypt the setting information file, and also refers to the public key of the application setting terminal 4 to verify the signature added to the setting information file (step ST166).
As a result of verifying the signature, the setting information receiving unit 28 verifies whether or not the data have been altered on the way to the application executing terminal and whether or not the transmission source of the setting information file is an authorized one.

When the setting information receiving unit 28 certifies that the data have not been altered on the way to the application executing terminal and the setting information file has been transmitted from an authorized transmission source, the setting information processing unit 23 of the application executing terminal 6 operates in the same way that of above-mentioned Embodiment 1 does (steps ST12 to ST20 of Fig. 9) to make settings for an application and execute the application (step ST167).

As can be seen from the above description, in accordance with this Embodiment 8, there is provided an advantage of being able to prevent unnecessary leakage of information when exchange of data is carried out among the setting information managing server 5, the application setting terminal 4, and the application executing terminal 6, and to verify whether or not the data have been altered.
The present embodiment offers another advantage of being able to verify whether or not the data come from a specific application setting terminal 4 by encrypting the data by using the public key of the setting information managing server 5 and that of the application executing terminal 6.

### Embodiment 9.

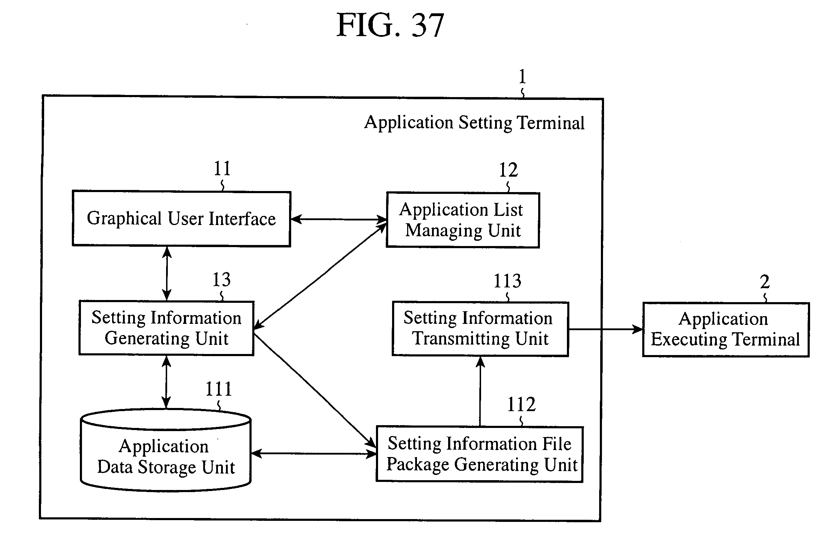

Fig. 37 is a block diagram showing an application setting terminal in accordance with Embodiment 9 of the present invention. In the figure, because the same reference numerals as those shown in Fig. 2 denote the same components or like components, the explanation of these components will be omitted hereafter.
An application data storage unit 111 is comprised of, for example, a hard disk drive and so on, and stores application data which are the one about a main part of an application.

A setting information file package generating unit 112 carries out a process of acquiring the application data about an application described in a setting information file generated by a setting information generating unit 13 from the application data storage unit 111, and packaging the application data and the setting information file into a single file.
A setting information transmitting unit 113 is comprised of, for example, a communication MODEM and so on, and carries out a process of transmitting the setting information file package which is the file into which the application data and the setting information file have been packaged by the setting information file package generating unit 112 to an application executing terminal 2. A file transmission means is comprised of the setting information file package generating unit 112 and the setting information transmitting unit 113.

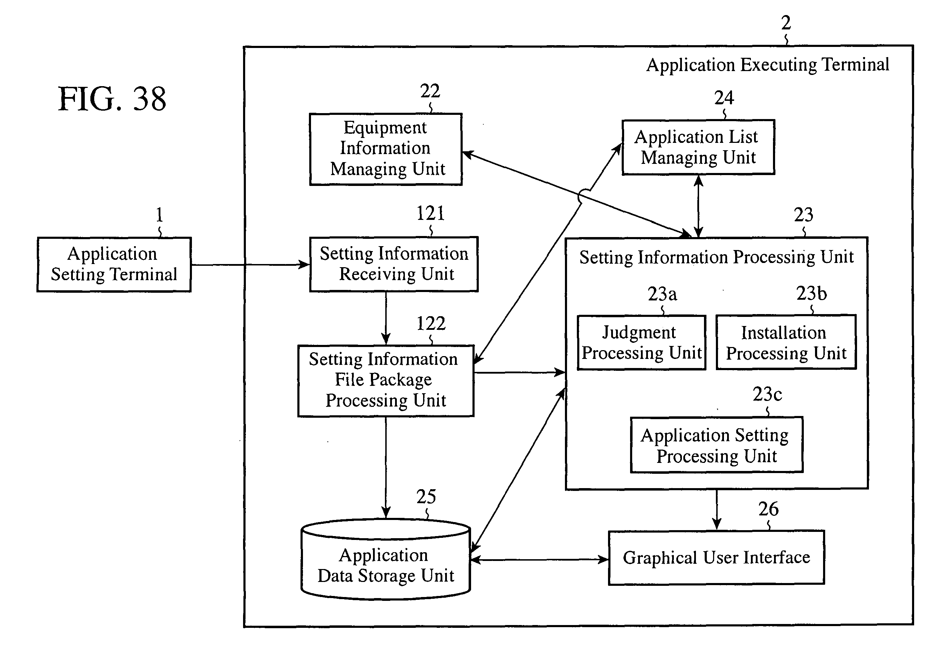

Fig. 38 is a block diagram showing the application executing terminal in accordance with Embodiment 9 of the present invention. In the figure, because the same reference numerals as those shown in Fig. 3 denote the same components or like components, the explanation of these components will be omitted hereafter.
A setting information receiving unit 121 is comprised of, for example, a communication MODEM and so on, and carries out a process of receiving the setting information file package transmitted from the application setting terminal 1. The setting information receiving unit 121 constructs a file receiving means.
A setting information file package processing unit 122 carries out a process of expanding the setting information file package received by the setting information receiving unit 121, extracting both the setting information file and the application data from the package, outputting the setting information file to a setting information processing unit 23, and storing the application data in an application data storage unit 25.

Next, the operation of the application setting terminal and that of the application executing terminal will be explained.

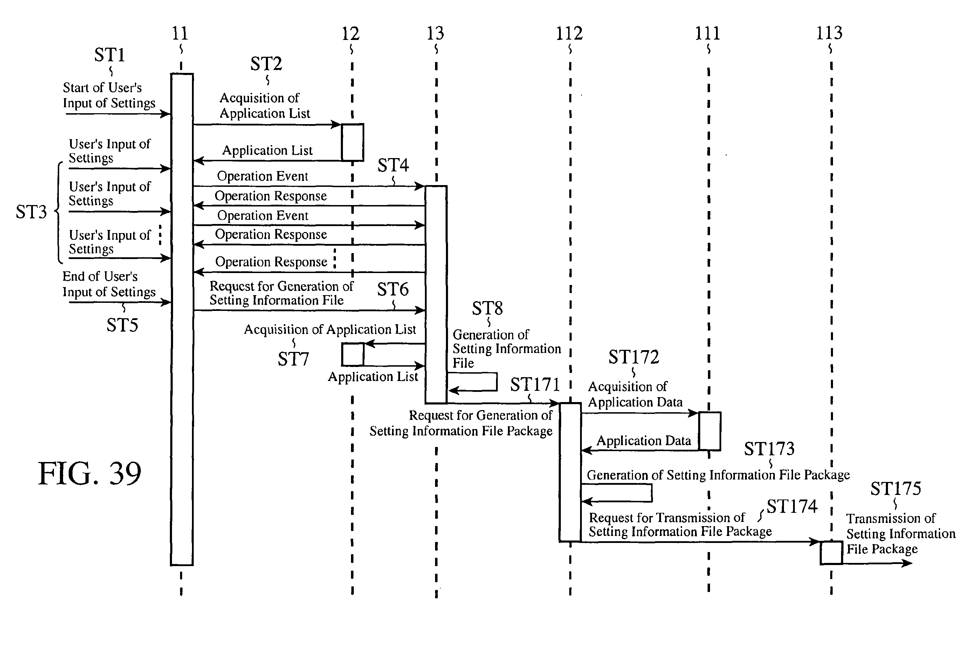

Fig. 39 is a sequence diagram showing a process of making settings for an application and transmitting a setting information file having the settings to the application executing terminal 2, which is carried out by the application setting terminal 1.

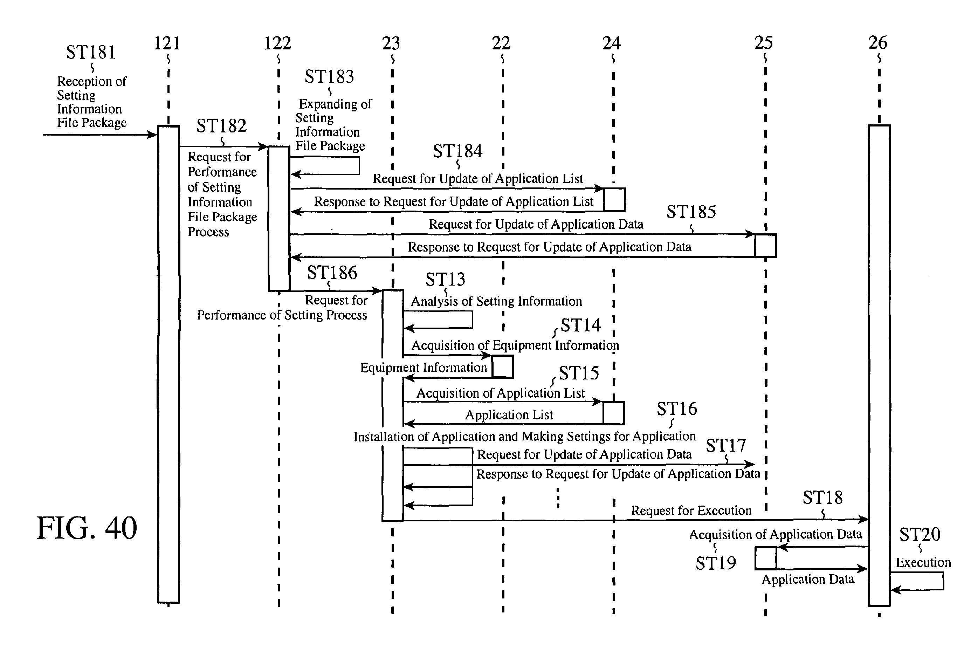

Fig. 40 is a sequence diagram showing a process of receiving the setting information file, and making settings for the application and executing the application, which is carried out by the application executing terminal 2.

When generating a setting information file in the same way as that shown in above-mentioned Embodiment 1 (step ST8), the setting information generating unit 13 of the application setting terminal 1 issues a request for generation of a setting information file package to the setting information file package generating unit 112, (step ST171).
When receiving the request for generation of a setting information file package from the setting information generating unit 13, the setting information file package generating unit 112 recognizes the application described in the setting information file and then acquires the application data about the application from the application data storage unit 111 (step ST172).

The setting information file package generating unit 112 then packages both the application data and the setting information file into a single file (step ST173), outputs the setting information file package which is the file into which both the application data and the setting information file are packaged to the setting information transmitting unit 113, and makes a request of the setting information transmitting unit 113 for transmission of the setting information file package (step ST174) .
When receiving the request for transmission of the setting information file package from the setting information file package generating unit 112, the setting information transmitting unit 113 transmits the setting information file package to the application executing terminal 2 (step ST175).

When receiving the setting information file package transmitted from the application setting terminal 1 (step ST181), the setting information receiving unit 121 of the application executing terminal 2 outputs the setting information file package to the setting information file package processing unit 122, and then outputs a request to process the setting information file package to the setting information file package processing unit 122 (step ST182).

When receiving the request to process the setting information file package from the setting information receiving unit 121, the setting information file package processing unit 122 expands the setting information file package and then extracts both the setting information file and the application data from the package (step ST183).
The setting information file package processing unit 122 then issues a request for update of the application list which is a request for addition of an unregistered application to the application list to an application list managing unit 24 (step ST184).

Next, in order to store the extracted application data in the application data storage unit 25, the setting information file package processing unit 122 outputs a request for update of the application data to the application data storage unit 25 (step ST185).
The setting information file package processing unit 122 then outputs the extracted setting information file to the setting information processing unit 23, and issues a request to perform a setting process to the setting information processing unit 23 (step ST186).
Because processes of step ST13 and subsequent steps are the same as those of above-mentioned Embodiment 1, the explanation of the processes will be omitted hereafter.

As can be seen from the above description, the application setting terminal in accordance with this embodiment 9 is constructed in such a way as to package the application data about an application described in the setting information file generated by the setting information generating unit 13 and the setting information file into a file and transmit this file to the application executing terminal 2. Therefore, the application executing terminal 2 does not have to carry out the process of acquiring the application data. Furthermore, because it is not necessary to provide an accessing means of enabling the user to access an application resource 3, the present embodiment is suitable for use in a case in which the application executing terminal 2 is free standing.

### Industrial Applicability

As mentioned above, the application setting terminal in accordance with the present invention is suitable for use in a case in which a user installs a desired application into an application executing terminal and then makes settings such as an on-screen arrangement of the application.

## Claims

1. An application setting terminal comprising:
an accepting means for displaying a screen corresponding to a screen displayed by an application executing terminal that executes an application, and accepting both a selection of an application to be installed and an on-screen arrangement of the application, which are input via said screen, and for accepting settings made for said application;
an attribution information managing means for managing pieces of attribution information about various applications;
a file generating means for acquiring the attribution information about the application the selection of which is accepted by said accepting means form the pieces of attribution information managed by said attribution information managing means to generate a setting information file including the attribution information about said application, and information about the on-screen arrangement and information about the settings made for said application, which are accepted by said accepting means; and
a file transmission means for transmitting the setting information file generated by said file generating means to said application executing terminal.

2. The application setting terminal according to claim 1, **characterized in that** said application setting terminal includes a key managing means for managing a secret key and a public key of the application setting terminal itself, and a public key exchanging means for transmitting the public key of the application setting terminal itself, which is managed by said key managing means, to the application executing terminal, and for receiving a public key of said application executing terminal, and **characterized in that**, when the file transmission means transmits the setting information file generated by the file generating means to said application executing terminal, the application setting terminal adds a signature to said setting information file by using the secret key of the application setting terminal itself, which is managed by said key managing means, and also encrypts said setting information file by using the public key of said application executing terminal.

3. The application setting terminal according to claim 1, **characterized in that** said application setting terminal includes an equipment information collecting means for acquiring equipment information about the application executing terminal, and a usable application specifying means for referring to both the equipment information acquired by said equipment information collecting means and the pieces of attribution information managed by the attribution information managing means to specify applications which can be used on said application executing terminal, and **characterized in that** the accepting means accepts a selection of an application to be installed by limiting the application to be installed to one of the usable applications.

4. The application setting terminal according to claim 1, **characterized in that** said application setting terminal includes a terminal detecting means for detecting an application executing terminal connected to a network, and the accepting means accepts a selection of an application to be installed to an application executing terminal which is detected by said terminal detecting means.

5. The application setting terminal according to claim 1, **characterized in that** the file transmission means packages the setting information file generated by the file generating means and data about a main part of the application the selection of which is accepted by said accepting means into a file, and transmits this file to the application executing terminal.

6. An application executing terminal comprising:
a file receiving means for receiving a setting information file transmitted thereto from an application setting terminal;
an equipment information managing means for managing equipment information about the application executing terminal itself;
a judging means for referring to both the equipment information managed by said equipment information managing means and attribution information about an application, said attribution information being included in the setting information file received by said file receiving means, so as to judge whether or not said application executing terminal can use said application thereon;
an installation means for installing said application with reference to the attribution information about said application when a result of the judgment by said judging means shows that said application executing terminal can use said application thereon;
an application setting means for placing the application installed by said installation means on a screen according to arrangement information about an on-screen arrangement, said arrangement information being included in the setting information file received by said file receiving means, and for making settings for said application according to setting information about settings made for the application, said setting information being included in said setting information file; and
an application executing means for executing the application for which the settings are made by said application setting means.

7. The application executing terminal according to claim 6, **characterized in that** when the installation means installs the application, if there is a lack of any file required for the installation, the installation means acquires a file required for the installation from an application resource.

8. The application executing terminal according to claim 6, **characterized in that** said application executing terminal includes a key managing means for managing a secret key and a public key of the application executing terminal itself, and a public key exchanging means for transmitting the public key of the application executing terminal itself, which is managed by said key managing means, to the application setting terminal, and for receiving a public key of said application setting terminal, and **characterized in that** when the file receiving means receives a setting information file transmitted from said application setting terminal, said application executing terminal decrypts said setting information file by using the secret key of the application executing terminal itself which is managed by said key managing means, and also verifies a signature added to said setting information file by using the public key of said application setting terminal.

9. An application executing terminal comprising:
an accepting means for receiving setting operation information from an application setting terminal in which a Web client is mounted so as to accept both a selection of an application to be installed and an on-screen arrangement of the application according to said setting operation information, and for accepting settings made for said application;
an attribution information managing means for managing pieces of attribution information about various applications;
an attribution information acquiring means for acquiring the attribution information about the application the selection of which is accepted by said accepting means from the pieces of attribution information managed by said attribution information managing means;
an equipment information managing means for managing equipment information about the application executing terminal itself;
a judging means for referring to both the equipment information managed by said equipment information managing means and the attribution information about the application which is acquired by said attribution information acquiring means so as to judge whether or not said application executing terminal can use said application thereon;
an installation means for installing said application with reference to the attribution information about said application when a result of the judgment by said judging means shows that said application executing terminal can use said application thereon;
an application setting means for placing the application installed by said installation means on a screen according to information about the on-screen arrangement accepted by said accepting means, and for making settings for said application according to information about the settings made for the application accepted by said accepting means; and
an application executing means for executing the application for which the settings are made by said application setting means.

10. The application executing terminal according to claim 6, **characterized in that** only when a transmission source of the setting information file received by the file receiving means is an application setting terminal which is preregistered in the application executing terminal, the installation means installs said application with reference to the attribution information about the application, the attribution information being included in said setting information file.

11. The application executing terminal according to claim 6, **characterized in that** the application setting means holds setting authority information indicating setting authority which a user who uses the application setting terminal has, and puts restrictions on which setting can be made for the application according to said setting authority information.

12. A setting information managing server comprising:
an attribution information managing means for managing pieces of attribution information about various applications;
an equipment information managing means for managing equipment information about an application executing terminal;
an equipment information transmitting means for, when an application setting terminal generates a setting information file, transmitting the equipment information about the application executing terminal managed by said equipment information managing means to said application setting terminal; and
a file transferring means for receiving the setting information file from said application setting terminal to transfer said setting information file to the application executing terminal.

13. The setting information managing server according to claim 12, **characterized in that** the setting information managing server includes a checking and verifying means for checking a transmission source of the setting information file received by the file transferring means, and for verifying whether or not the setting information file has been tampered.
